# EUROPÄISCHE PATENTANMELDUNG

(11) **EP 2 696 457 A2**
(43) Veröffentlichungstag der Anmeldung: **12.02.2014**
(21) Anmeldenummer: 13179318.4
(22) Anmeldetag: 05.08.2013
(51) Int. Cl.: H02G 3/20

(54) **Verschalungssystem für eine in eine Betonwand integrierte Leuchte, in eine Betonwand integrierte Leuchte und ein Verfahren zum Ausbilden eines Hohlraums in einer Betonwand zum Aufnehmen einer Leuchte**

(30) Priorität: 06.08.2012 AT 8692012
(71) Anmelder: Dokulil, Peter, 5340 St. Gilgen (AT); Elmenreich, Albert, 6020 Innsbruck (AT)
(72) Erfinder: Dokulil, Peter, 5340 St. Gilgen (AT); Elmenreich, Albert, 6020 Innsbruck (AT)
(74) Vertreter: Patronus IP Patent- und Rechtsanwälte

(57) **Zusammenfassung**

Die Erfindung betrifft ein Verschalungssystem für eine in eine Betonwand integrierte Leuchte, eine solche Leuchte sowie ein Verfahren zum Ausbilden eines Hohlraumes in der Betonwand zum Aufnehmen einer Leuchte. Das erfindungsgemäße Verschalungssystem umfasst einen Hohlkörper zum Aufnehmen eines Leuchtmittels, wobei der Hohlkörper eine Öffnung aufweist, und einen Schalungskörper, der am Hohlkörper derart befestigbar ist, dass er die Öffnung verschließt, wobei der Schalungskörper aus einem harten Kern und einem weichen Mantel ausgebildet ist.

## Beschreibung

Die vorliegende Erfindung betrifft ein Verschalungssystem für eine in eine Betonwand integrierte Leuchte, sowie eine in eine Betonwand integrierte Leuchte und ein Verfahren zum Ausbilden eines Hohlraums in einer Betonwand zum Aufnehmen einer Leuchte.

Es ist seit langem bekannt, Hohlkörper zum Aufnehmen von Leuchten in einer Verschalung zu befestigen, die mit Beton gefüllt wird, so dass die Hohlkörper einen Hohlraum zur Aufnahme von Leuchten begrenzen. Beispielhaft wird auf die DE 43 12 661 C2, DE 44 03 238 C1, EP 0 662 742 B1, DE 195 30 429 C1, DE 198 42 512 C1, DE 10 2006 019 167 B3 sowie auf die DE 196 07 254 C2 verwiesen.

In der DE 196 07 254 C2 wird ein solcher Hohlkörper für die Betonbauinstallation beschrieben, der etwa hohlzylindrisch ausgebildet ist und an seinem rückwärtigen Ende einen Boden aufweist. Die vordere Seite des hohlzylindrischen Körpers ist offen und kann mit einem separat ausgebildeten Frontteil verschlossen werden. Das Frontteil weist einen umlaufenden Außenflansch auf, dessen Durchmesser etwas größer als der des zylindrischen Hohlkörpers ist. Am Außenflansch stehen radial nach außen Befestigungsflansche vor, welche an einer Verschalungsplatte befestigt werden können. Das an die Verschalungsplatte befestigte Frontteil wird zusammen mit dem hohlzylindrischen Körper beim Ausbilden der Betonwand mit Beton umgossen. Beim Entschalen der Betonwand wird der Außenflansch zusammen mit der Verschalungsplatte aus der Betonwand herausgerissen. Es entsteht ein ringförmiger Hohlraum am vorderen Randbereich des hohlzylindrischen Körpers. Dieser ringförmige Hohlraum wird in einem weiteren Arbeitsgang mit Putz ausgefüllt. Durch den Putz können die vorderen Kanten des hohlzylindrischen in die Betonwand integrierten Körper versteckt werden. Der Putz wird vorzugsweise so aufgetragen, dass der Übergang zwischen dem Putz und dem Beton schwer zu erkennen ist.

Aus der DE 44 02 977 C2 und der DE 195 10 819 C2 gehen Hohlkörper für die Elektroinstallation, insbesondere zur Aufnahme von Leuchten, hervor, wobei die entsprechende Betonwand mit einem Doppelbetonierverfahren hergestellt wird. Hierbei wird zunächst eine Sichtplatte der Wandung betoniert, in welche durch die Hohlkörper vorbestimmte Ausnehmungen begrenzt sind. Danach wird der Rückteil der Wandung betoniert.

Die DE 10 2006 011 094 A1 offenbart eine Einbauvorrichtung zum Aufnehmen einer Leuchte, wobei die Einbauvorrichtung in eine Deckenwandung eingebaut werden kann. Hierzu wird in die Deckenwandung ein Loch eingebracht, das groß genug ist, um die Einbauvorrichtung aufzunehmen. Danach wird die Decke verputzt, wobei die Einbauvorrichtung an ihrem unteren Rand mit einer Fase derart ausgebildet ist, dass der Putz auf der Fase verbleibt und die vordere Kante der Einbauvorrichtung im wesentlichen hinter dem Putz versteckt ist. Bei einer alternativen Ausführungsform ist ein Eingießtopf vorgesehen, der in eine Betondecke eingegossen werden kann. Der Eingießtopf weist eine zur äußeren Fläche der Betondecke gerichtete Öffnung auf, die beim Eingießen in der Betondecke durch eine Verschalung verschlossen ist. Die Verschalung ist mittels einer Gewindestange, die sich bis zum Boden des Eingießtopfes erstreckt, mit diesem fest verbunden.

Der Erfindung liegt die Aufgabe zugrunde, ein Verschalungssystem für eine in eine Betonwand integrierte Leuchte, eine in eine Betonwand integrierte Leuchte und ein Verfahren zum Ausbilden eines Hohlraums in einer Betonwand zum Aufnehmen einer Leuchte zu schaffen, bei welchen ein Hohlkörper zur Aufnahme der Leuchte mit Abstand zur sichtbaren Außenfläche einer Betonwand anordbar ist, ohne dass ein Verputzen des Öffnungsbereiches notwendig ist.

Die Aufgabe wird durch eine Verschalungssystem für eine in eine Betonwand integrierte Leuchte gemäß Anspruch 1, eine in eine Betonwand integrierte Leuchte gemäß Anspruch 10 und ein Verfahren zum Ausbilden eines Hohlraums in einer Betonwand zum Aufnehmen einer Leuchte gemäß Anspruch 12 gelöst. Vorteilhafte Ausgestaltungen der Erfindung sind in den jeweiligen Unteransprüchen angegeben.

Ein erfindungsgemäßes Verschalungssystem für eine in eine Betonwand integrierte Leuchte umfasst
- einen Hohlkörper zum Aufnehmen eines Leuchtmittels, wobei der Hohlkörper eine Öffnung aufweist, und
- einen Schalungskörper, der am Hohlkörper derart befestigbar ist, dass er die Öffnung verschließt, wobei der Schalungskörper aus einem harten Kern und einem weichen Mantel ausgebildet ist.

Eine Betonwand im Sinne der vorliegenden Erfindung umfasst eine vertikale Wand, eine horizontale Decke, eine Treppe, eine Rampe, und eine gegenüber der Vertikalen geneigte Wand oder geneigte Decke, hergestellt aus Beton oder Stahlbeton, in Ortbeton- oder Fertigteilbauweise.

Durch das Abschließen der Öffnung des Hohlkörpers mittels eines Schalungskörpers mit weicher Oberfläche kann nach dem Vergießen der Betonwand der Schalungskörper aus der Betonwand entfernt werden, ohne dass die Oberfläche der Betonwand beschädigt wird. Ein Verputzen des Öffnungsbereiches ist somit nicht notwendig.

Mit einem solchen Schalungskörper kann der Öffnungsbereich beliebig geformt werden, so dass frei form- und strukturierbare Übergangsflächen aus Beton zwischen der Öffnung des Hohlkörpers und der sichtbaren Außenfläche der Betonwand geschaffen werden. Insbesondere ist es möglich, in der Betonwand einen sich etwa trichterförmig aufweitenden Kanal von der Öffnung des Hohlkörpers zur sichtbaren Außenfläche der Betonwand auszubilden. Die Querschnittsform des trichterförmigen Kanals kann beliebig ausgebildet sein, insbesondere geradlinig, parabelförmig, ellipsenförmig. Der Kanal kann somit als Reflektor für das von dem Leuchtmittel abgegebene Licht wirken.

Mit dem Schalungskörper kann ein Kanal ausgebildet werden, der vorzugsweise im Bereich der Außenfläche der Betonwand eine größere Öffnung als die Öffnung des Hohlkörpers aufweist. Insbesondere ist es zweckmäßig, wenn der Schalungskörper die Öffnung des Hohlkörpers bündig abschließt, so dass beim Ausgießen mit Beton die Wandung des Hohlkörpers, in dem die Öffnung angebracht ist, vollständig vom Beton abgedeckt wird, so dass sie von Außen nicht sichtbar ist.

Der Schalungskörper ist vorzugsweise zweiteilig ausgebildet, wobei der harte Kern und der weiche Mantel separat voneinander ausgebildet sind, so dass beim Entschalen zunächst der harte Kern entfernt werden kann und danach der weiche Mantel vom Beton abgezogen wird. Es ist jedoch auch grundsätzlich möglich den Schalungskörper als ein Teil umfassend den harten Kern und den Mantel beim Entschalen zu entfernen.

Der harte Kern des Schalungskörpers ist vorzugsweise aus einem harten Kunststoffteil, aus einem Metall oder einem Stück Holz ausgebildet.

Der weiche Mantel ist vorzugsweise aus einem Schaumstoff ausgebildet, insbesondere aus einem geschlossenzelligen Schaumstoff mit einer glatten Oberfläche. Zur Strukturierung der Betonoberfläche kann der Schaumstoff mit einer strukturierten Oberfläche ausgebildet sein. Der Schaumstoff besteht bspw. aus Polyurethan (PU).

Durch den harten Kern wird im wesentlichen die Form des Kanals definiert. Der weiche Mantel erlaubt eine einfache und saubere Entschalung. Das einfache Entschalen und die zuverlässige Formgebung kann sicher gestellt werden, wenn der Mantel weicher als der Kern ist.

Der weiche Mantel ist vorzugsweise dünnwandig ausgebildet mit einer Dicke im Bereich von 0,5 mm bis 30 mm, insbesondere bis 20 mm, oder von 3 mm bis 20 mm, insbesondere im Bereich von 3 mm bis 15 mm. Ein solcher dünnwandiger Mantel, der insbesondere formschlüssig auf dem harten Kern sitzt, wird beim Vergießen mit Beton um einen definierten Betrag zusammengedrückt, so dass eine vorbestimmte, gewünschte Form der Betonoberfläche erzielt wird. Je dünner die Wandung des weichen Mantels ist, desto geringer sind die Toleranzen aufgrund der Verformung des Mantels durch den Druck des Betons. Es hat sich gezeigt, dass der weiche Mantel sehr dünn sein kann, z.B. eine Dicke von 3 mm aufweisen kann, und trotzdem das Entschalen, d.h. das Herausnehmen des harten Kernes und das Abziehen des weichen Mantels aus der ausgehärteten Betonwand einfach möglich ist. Je nach Querschnittsform des Kanals kann der weiche Mantel auch eine Wandstärke von bis zu 120 mm erreichen

Das Verschalungssystem weist Befestigungsmittel zum Befestigen des Schalungskörpers am Hohlkörper auf. Diese Befestigungsmittel umfassen beispielsweise ein im Hohlkörper befindliches Halteelement in Form einer Leiste oder eines U-Profils, deren Länge größer als der Durchmesser der Öffnung ist und die zumindest eine Gewindebohrung und vorzugsweise zumindest zwei Gewindebohrungen aufweist, um mit entsprechenden Gewindeschrauben, die sich durch Durchgangslöcher im Schalungskörper, insbesondere im harten Kern des Schalungskörpers erstrecken, den Schalungskörper an der Leiste zu fixieren. Diese Gewindeschrauben sind lösbar, so dass sie zum Entschalen entfernt werden können. Die Leiste kann dann durch die Öffnung aus dem Hohlkörper herausgenommen werden. Der Schalungskörper, insbesondere der harte Kern des Schalungskörpers, weist vorzugsweise eine oder mehrere Durchgangsöffnungen zum Aufnehmen von jeweils einem Metallstift bzw. Nagel auf, um den Schalungskörper an einer Schalungsplatte zu befestigen.

Bei einer Weiterbildung der Erfindung ist das Halteelement beabstandet zur Innenfläche der Wandung des Hohlkörpers angeordnet, in dem die Öffnung ausgebildet ist. Hierdurch kann der verjüngende Schalungskörper ein Stück in die Öffnung hineingezogen werden, so dass die Kante der Öffnung exakt bündig vom Schalungskörper abgedichtet wird und der Schalungskörper selbst nicht die Wandung abdeckt. Hierdurch ist sichergestellt, dass beim Ausgießen mit Beton die Wandung vollständig mit Beton abgedeckt wird und an der fertigen Betonwand nicht mehr sichtbar ist.

Der Hohlkörper ist vorzugsweise zweiteilig ausgebildet, insbesondere mit einem lösbaren Deckel, so dass bei der Montage des Schalungssystems auf einer Verschalungsplatte der Innenbereich des Hohlkörpers frei zugänglich ist, um den Schalungskörper am Hohlkörper und/oder an der Schalungsplatte zu fixieren.

Der Hohlkörper kann Laschen zum Justieren und/oder zum Befestigen des Hohlkörpers an der Verschalung und/oder an Bewehrungseisen aufweisen. Dies ist insbesonders bei großen Hohlkörpern von Vorteil, auf welche beim Vergießen mit Beton erhebliche Momente wirken.

Am Hohlkörper sind eine oder mehrere Öffnungen für die Zuführung von Elektroleitungen ausgebildet. Die Öffnungen sind vorzugsweise mit entsprechenden Stutzen versehen, an welche Leerrohre für Elektroleitungen betondicht aufsetzbar sind.

Eine erfindungsgemäße Leuchte, die in eine Betonwand integriert ist, umfasst
- einen in die Betonwand eingegossenen Hohlkörper, in dem ein Leuchtmittel angeordnet ist, wobei der Hohlkörper eine Öffnung zum Austreten von dem Leuchtmittel abgegebenen Licht aufweist, und
- einen sich von der Öffnung nach außen hin aufweitenden Kanal, der von dem Beton der Betonwand begrenzt wird.

Bei der erfindungsgemäßen Leuchte wird der Kanal ausschließlich von dem Beton der Betonwand begrenzt. Hierdurch liegt eine durchgehende Sichtbetonoberfläche vor, die sich von der Außenfläche der Betonwand bis zur Öffnung des Hohlkörpers erstreckt. Der Kanal weitet sich nach außen hin auf, so dass er als Reflektor für das vom Leuchtmittel abgegebene Licht dienen kann. Der Kanal ist insbesondere trichterförmig aufweitend ausgebildet.

Die Öffnung des Hohlkörpers ist vorzugsweise von der Außenfläche der Betonwand ein Stück in die Betonwand versetzt, wobei der Abstand zwischen der Ebene der Außenfläche und der Öffnung vorzugsweise zumindest 15 mm, insbesondere 20 mm, 25 mm, 30 mm, 35 mm, 40 mm, 45 mm, 50 mm, 55 mm, 60 mm, 65 mm, 70 mm, 75 mm, 80 mm, 85 mm bzw. 90 mm beträgt. Die Länge des zur Ausbildung des Kanals verwendeten Schalungskörpers entspricht diesem Abstand. Sofern die Betonwand ausreichend dick ist, kann dieser Abstand auch bis zu 200 mm oder mehr betragen.

Der Übergang zwischen dem Kanal und der Außenfläche der Betonwand kann durch eine abgewinkelte Kante ausgebildet sein. Es ist jedoch auch möglich, diesen Übergang abzurunden, so dass ein kantenfreier Übergang zwischen der Außenfläche der Betonwand und dem Kanal ausgebildet wird.

Die Öffnung des Hohlkörpers ist parallel zur Außenfläche der Betonwand angeordnet. Die Leuchte kann jedoch auch derart ausgebildet sein, dass die Öffnung des Hohlkörpers gegenüber der Ebene der Außenfläche der Betonwand geneigt ist.

Die Erfindung betrifft weiterhin ein Verfahren zum Ausbilden eines Hohlraumes in einer Betonwand zum Aufnehmen einer Leuchte, wobei das Verfahren folgende Schritte umfasst:
a) Befestigen eines Schalungskörpers, der einen harten Kern und einen weichen Mantel aufweist, an einem Hohlkörper, so dass eine Öffnung des Hohlkörpers durch den Schalungskörper abgedeckt ist,
b) Befestigen des Schalungskörpers an einer Bauteilschalung mit der von dem Hohlkörper abgewandten Seite,
c) Ausgießen der Bauteilschalung mit Beton,
d) Entfernen der Bauteilschalung, und
e) Entfernen des Schalungskörpers.

Mit diesem Verfahren wird ein Hohlraum in einer Betonwand geschaffen, der zur Aufnahme einer Leuchte geeignet ist und einen sich von der Öffnung des Hohlkörpers nach außen hin erstreckenden Kanal aufweist, der ausschließlich von Beton begrenzt wird. Mit diesem Verfahren kann die oben erläuterte Leuchte, die in eine Betonwand integriert ist, hergestellt werden.

Die Schritte a) und b) können auch in umgekehrter Reihenfolge ausgeführt werden, d.h., dass der Schalungskörper zunächst an der Bauteilschalung befestigt wird und danach der Schalungskörper und der Hohlkörper miteinander verbunden werden.

Der Hohlkörper kann zusätzlich an der Bauteilschalung und/oder an einer Eisenbewehrung fixiert werden, bevor die Bauteilschalung mit Beton ausgegossen wird.

Bei diesem Verfahren wird vorzugsweise das oben erläuterte Schalungssystem verwendet.

Nach einem weiteren Aspekt der vorliegenden Erfindung kann gemäß den oben erläuterten Prinzipien eine Einzelleuchte mit einem integrierten Hohlkörper und einem Kanal, der in einer Freiform gestaltet sein kann, aus Beton ausgebildet sein.

Nach einem weiteren Aspekt der vorliegenden Erfindung kann ein Schalungskörper umfassend einen harten Kern und einen weichen Mantel vorgesehen sein, um eine Ausnehmung, insbesonders sacklochförmige Ausnehmung in einer Betonwand oder einem sonstigen Betonelement auszubilden. Ein solcher Schalungskörper kann auch ohne Hohlkörper verwendet werden.

Nach einer vorteilhaften Weiterbildung der oben dargelegten Schalungskörper kann der weiche Mantel in eine Matritze, insbesondere eine vollflächige Schalungsmatritze, integriert sein. Eine solche Matritze ist ein Formteil, das sich über den sichtbaren Bereich eines auszubildenden Betonbauteils erstreckt, so dass dessen Oberfläche durch die Matritze geformt bzw. strukturiert wird.

Gemäß einer Weiterbildung der vorliegenden Erfindung kann der Hohlkörper eine trichterartige Form aufweisen, die derart hoch bemessen ist, dass die Oberkante höher als die Oberkante eines zu fertigenden Betonbauteils ist. Hierdurch wird ein Verschalungssystem bereitgestellt, mit welchem ein Decken- oder Wanddurchbruch erzeugt wird. Dieser Hohlkörper kann nach dem Verformen, insbesondere wenn er nach außen hin trichterförmig aufweitend ausgebildet ist, aus dem Betonbauteil ausgeformt werden.

Nach einer speziellen Weiterbildung kann der Hohlkörper des Verschalungssystems eine kleinere Querschnittsform als ein Funktionselement, wie z.B. eine Leuchte oder ein Schalter, aufweisen, die in einen durch den Schalungskörper ausgebildeten Kanal, einsetzbar sind. Der Schalungskörper ist dementsprechend mit einem größeren Querschnitt als der Hohlkörper ausgebildet.

Die Erfindung wird nachfolgend beispielhaft näher anhand der Zeichnungen erläutert. Die Zeichnungen zeigen in:
- Fig. 1: Teile eines erfindungsgemäßen Verschalungssystems nach einem ersten Ausführungsbeispiel zusammen mit einem Leuchtmittel in einer Explosionsdarstellung,
- Fig. 2a - 2r: das Schalungssystem aus Figur 1 in unterschiedlichen Zusammenbau- und Einbauzuständen,
- Fig. 3: das an eine Bauteilschalung montierte Schalungssystem aus Fig. 1 in einer Schnittdarstellung,
- Fig. 4: einen mittels des Schalungssystems erzeugten Hohlraum in einer Betonwand in einer Schnittdarstellung,
- Fig. 5: den Hohlraum aus Fig. 4, in den das Leuchtmittel und das Betriebsgerät eingesetzt sind,
- Fig. 6: Teile eines Schalungssystems nach einem zweiten Ausführungsbeispiel in einer Explosionsdarstellung,
- Fig. 7a-7j: das Schalungssystem gemäß dem zweiten Ausführungsbeispiel in unterschiedlichen Zusammenbau- und Einbauzuständen,
- Fig. 8: das an eine Bauteilschalung montierte Schalungssystem aus Fig. 6 in einer Schnittdarstellung,
- Fig. 9: ein mit dem Schalungssystem aus Fig. 8 gebildeter Hohlraum in einer Betonwand in einer Schnittdarstellung,
- Fig. 10: der Hohlraum aus Fig. 9, in den das Leuchtmittel und das Betriebsgerät eingesetzt sind,
- Fig. 11: die Leuchte nach dem ersten Ausführungsbeispiel, wobei als Leuchtmittel ein Leuchtdiodenarray vorgesehen ist, in einer Querschnittsdarstellung,
- Fig. 12: die Leuchte nach dem zweiten Ausführungsbeispiel, wobei als Leuchtmittel ein Leuchtdiodenarray vorgesehen ist, in einer Querschnittsdarstellung,
- Fig. 13: schematisch grob vereinfacht unterschiedliche Positionen der Anordnung des Leuchtmittels bezüglich des Hohlraums,
- Fig. 14: schematisch grob vereinfacht ein erfindungsgemäßes Schalungssystem in Verbindung mit einer unebenen Bauteilschalung,
- Fig. 15: Kombinationen mit unterschiedlichem Grundriss, Schnitt und Bauteilschalungen,
- Fig. 16 - 30: Beispiele für unterschiedliche Kombinationen aus Fig. 15 in einer perspektivischen Netzdarstellung,
- Fig. 31: Teile eines erfindungsgemäßen Verschalungssystems nach einem weiteren Ausführungsbeispiel, zusammen mit einem Leuchtmittel in einer Explosionsdarstellung,
- Fig. 32 - 43: das Schalungssystem aus Figur 31 in unterschiedlichen Zusammenbau- und Einbauzuständen,
- Fig. 44: das Schalungssystem aus Figur 31, auf eine Bauteilschalung montiert, in unterschiedlichen Einbauzuständen, in einer Schnittdarstellung,
- Fig. 45: das Schalungssystem aus Figur 31 sowie ein weiteres Verschalungssystem mit unterschiedlichen Ausführungen des weichen Kerns 4, in unterschiedlichen Einbauzuständen, in einer Schnittdarstellung,
- Fig. 46: einen speziell geformten Deckendurchbruch, in unterschiedlichen Einbauzuständen, in einer Schnittdarstellung, unter Anwendung des Prinzips des erfindungsgemäßen Verschalungssystems,
- Fig. 47: eine Herstellung einer Einzelleuchte, in unterschiedlichen Produktionszuständen, in einer Schnittdarstellung, unter Anwendung des Prinzips des erfindungsgemäßen Verschalungssystems,
- Fig. 48: die Einzelleuchte aus Figur 47, in verschiedenen Montagemöglichkeiten, in einer Schnittdarstellung,
- Fig. 49: das erfindungsgemäße Verschalungssystem in einer Variante, bei der der Leuchteneinsatz größer als der im Beton verbleibende Hohlkörper ist, in unterschiedlichen Einbauzuständen, in einer Schnittdarstellung,
- Fig. 50: eine alternative Befestigungsmöglichkeit des erfindungsgemäßen Verschalungssystems auf der Bauteilschalung mit einer Drehmomentschraube, in unterschiedlichen Einbauzuständen, in einer Schnittdarstellung,
- Fig. 51 - 52: verschiedene Ausformungsformen einer Freiformfläche im Betonbauteil, in einer Schnittdarstellung,
- Fig. 53: die Integration des erfindungsgemäßen Verschalungssystems in eine vollflächige Schalungsmatrize, in unterschiedlichen Einbauzuständen, in einer Schnittdarstellung,
- Fig. 54: einen Ring zur Halterung eines Leuchtmittels mit einem Bajonettverschluss,
- Fig. 55: eine Ring zur Halterung eines Leuchtmittels mit einem unterbrochenen Ringsteg,
- Fig. 56: einen harten Kern zum Einsetzen in eine Bodenwandung eines Hohlkörpers.

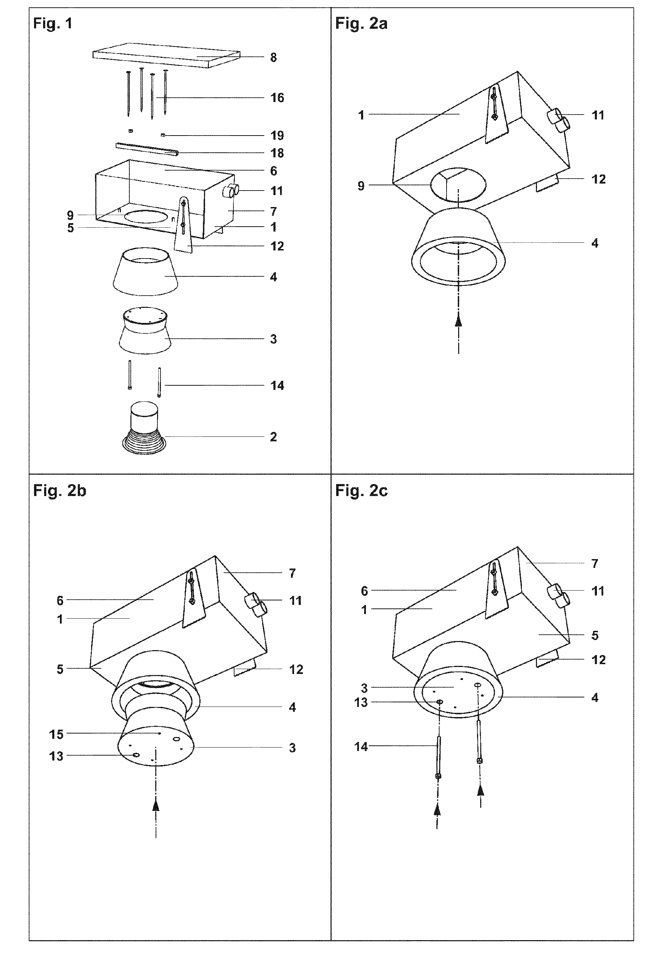

Nachfolgend wird anhand der Figuren 1 bis 5 ein erstes Ausführungsbeispiel der Erfindung erläutert. Ein erfindungsgemäßes Verschalungssystem weist einen Hohlkörper 1 zur Aufnahme eines Leuchtmittels 2 und einen zweiteiligen Schalungskörper mit einem harten Kern 3 und einem weichen Mantel 4 auf.

Im vorliegenden Ausführungsbeispiel ist der Hohlkörper 1 ein etwa quaderförmiger Körper mit einer Bodenwandung 5, zwei Längsseitenwandungen 6 und zwei Stirnseitenwandungen 7. Der Hohlkörper 1 weist einen formschlüssig aufsetzbaren Deckel 8 auf.

In der Bodenwandung 5 ist eine Öffnung 9 ausgebildet. Im vorliegenden Ausführungsbeispiel ist die Öffnung kreisförmig. Im Rahmen der Erfindung kann die Öffnung selbstverständlich andere Formen aufweisen. Die Öffnung 9 dient zum Einführen eines Betriebsgerätes 10, des Leuchtmittels 2 und zum Austreten von dem von dem Leuchtmittel 2 abgegebenen Licht.

An einer der beiden Stirnseitenwandungen 7 sind zwei Öffnungen zum Durchführen von elektrischen Leitungen ausgebildet, wobei diese Öffnung jeweils von einem AnschlussStutzen 11 umgeben sind, an welchen jeweils ein Leerrohr zur Durchführung der elektrischen Leitungen betondicht angesteckt werden kann. Diese Öffnungen können selbstverständlich auch an den Längsseitenwandungen 6 ausgebildet sein.

An den Längsseitenwandungen 6 ist jeweils eine Lasche 12 zur Fixierung des Hohlkörpers 1 an einer Eisenbewehrung oder zur Abstützung auf der Bauteilschalung befestigt. Die Laschen 12 sind in ihrer Position verstellbar, so dass sie auf unterschiedliche Abstände der Eisenbewehrung oder der Bauteilschalung zum Hohlkörper 1 einstellbar sind.

Der Hohlkörper 1 dieses Ausführungsbeispiels ist etwa quaderförmig ausgebildet. Es kann selbstverständlich zweckmäßig sein, den Hohlkörper in einer beliebigen anderen Form auszubilden, insbesondere so zu formen, dass das Leuchtmittel 2 und das Betriebsgerät 10 darin mit Spiel Platz haben, jedoch keine überflüssiger Hohlraum aufrecht erhalten wird, da grundsätzlich ein möglichst kleiner Hohlkörper bevorzugt wird, um einerseits die Schwächung der Betonwand möglichst gering zu halten und andererseits beim Ausgießen mit Beton dem Beton möglichst wenig Störungswiderstand zu bieten.

Der harte Kern 3 des Schalungskörpers ist aus zwei Kegelstümpfen zusammengesetzt, so dass er im Bereich seiner Mantelfläche einen geringfügigen Einzug aufweist. Der weiche Mantel 4 ist mit seiner Innenfläche komplementär zur Mantelfläche des harten Kerns 3 geformt, so dass der weiche Mantel 4 formschlüssig mit etwas Spannung auf dem harten Kern 3 sitzt. Die Außenfläche des weichen Mantels 4 bildet einen Kegelstumpf mit einem Ende mit kleinerem Durchmesser und einem Ende mit größerem Durchmesser.

Im harten Kern 3 sind zwei Durchgangslöcher 13 zur Aufnahme von Gewindeschrauben 14 und vier Durchgangslöcher 15, durch die sich jeweils ein Metallstift bzw. Nagel 16 erstrecken kann, ausgebildet.

Das Ende des Schalungskörpers mit kleinem Durchmesser ist im vorliegenden Ausführungsbeispiel geringfügig größer als die Öffnung 9 des Hohlkörpers 1.

An der Innenseite der Bodenwandung 5 sind benachbart zur Öffnung 9 zwei Stifte 17 angeformt.

Ein U-Profil 18 weist eine Länge auf, so dass es sich geringfügig über die beiden Stifte 17 hinaus erstreckt. An den Endbereichen des U-Profils 18 sind Löcher ausgebildet, so dass das U-Profil mit jeweils einem Loch auf einen der beiden Stifte 17 gesetzt werden kann. Das U-Profil weist zwei weitere Löcher auf, die symmetrisch zur Längsmitte des U-Profils ausgebildet sind und im Abstand der Durchgangslöchern 13 des harten Kerns 3 zur Aufnahme der Gewindeschrauben 14 angeordnet sind. Angrenzend an diesen Löchern im U-Profil ist jeweils eine Mutter 19 angeordnet, die vorzugsweise mit dem U-Profil, beispielsweise mittels Löten, Schweißen oder Klemmen fest verbunden ist. Diese Muttern 19 bilden somit integral mit dem U-Profil 18 ausgebildete Gewindebohrungen.

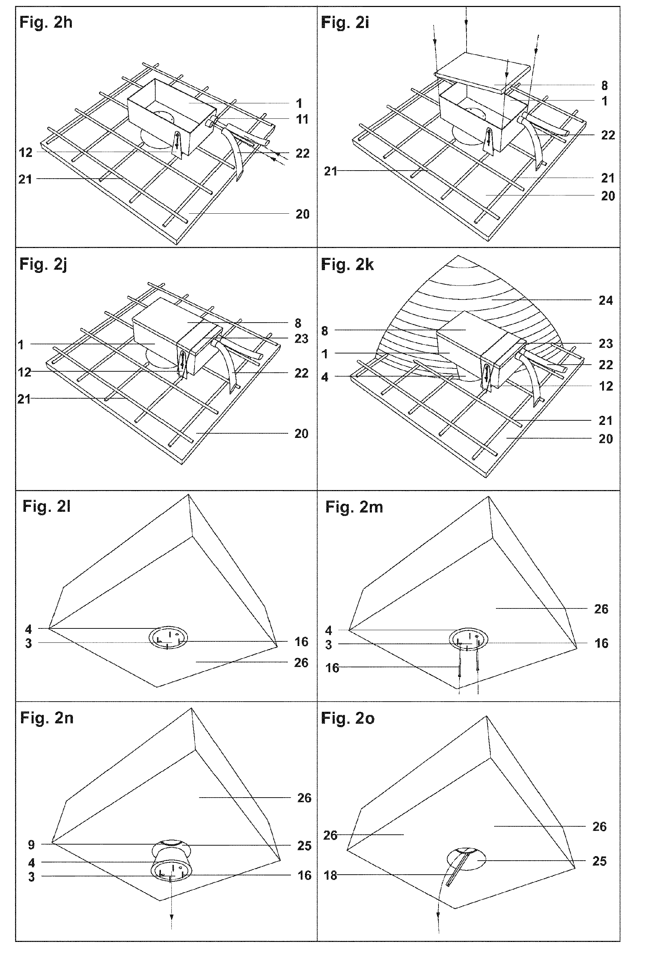

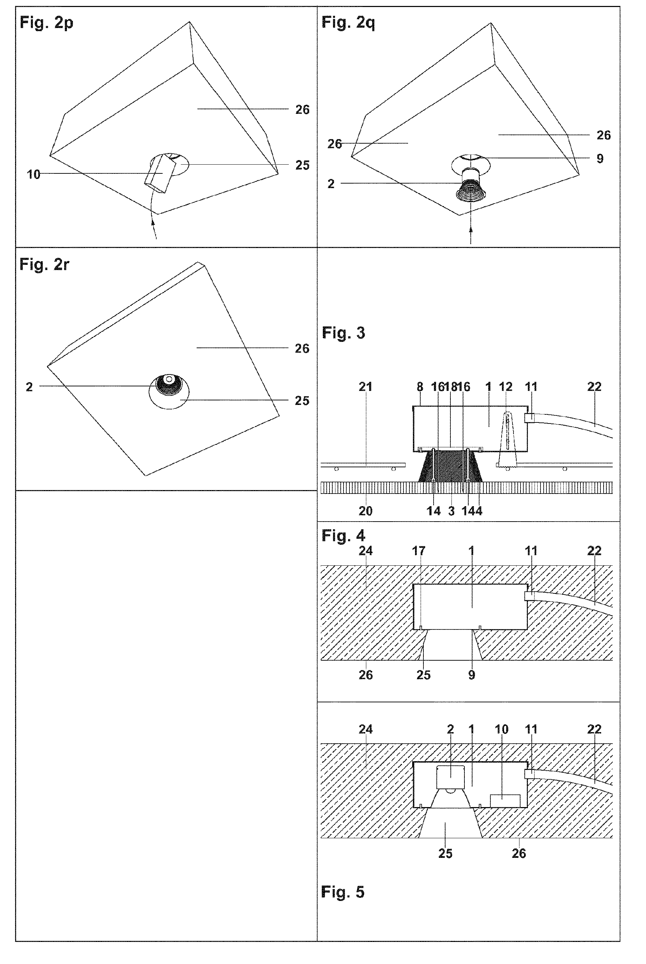

Nachfolgend wird anhand der Figuren 2a bis 2r der Zusammenbau des Schalungssystems und das Herstellen einer Betonwand mit einer integrierten Leuchte erläutert.

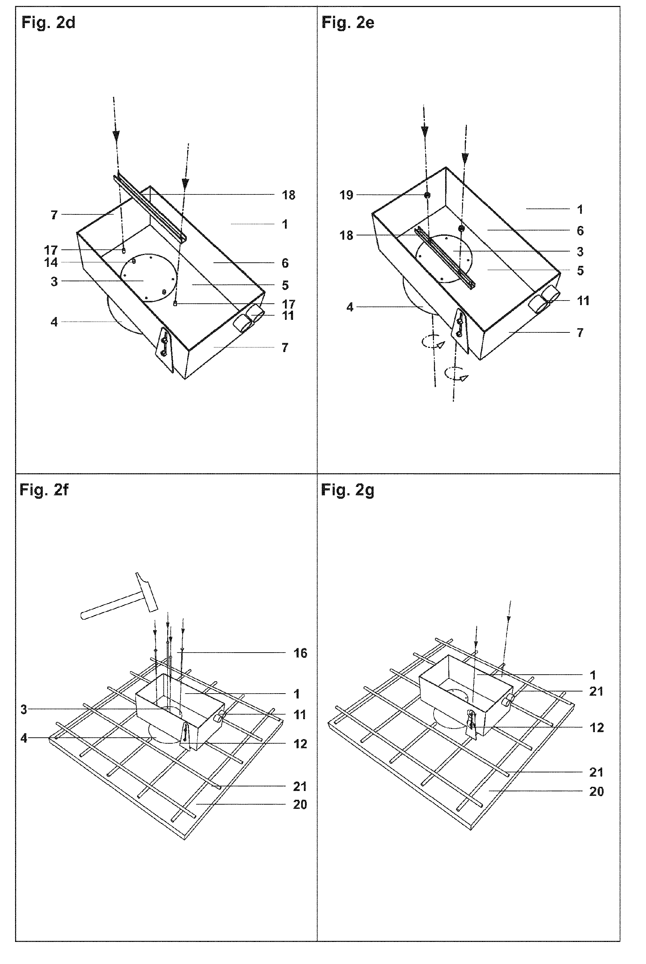

Zunächst wird der weiche Mantel 4 an die Außenseite der Bodenwandung 5 des Hohlkörpers 1 konzentrisch zur Öffnung 9 angeordnet (Fig. 2a). In den weichen Mantel 4 wird der harte Kern eingesetzt (Fig. 2b), wobei das schmälere Ende des Schalungskörpers an der Bodenwandung 5 anliegt. Durch die Durchgangslöcher 13 des harten Kerns 3 des Schalungskörpers werden jeweils eine Gewindeschraube 14 durchgesteckt, bis sie mit ihren Köpfen am harten Kern 3 anschlagen (Fig. 2c). Auf der Innenseite der Bodenwandung 5 wird das U-Profil 18 aufgesetzt, so dass die endseitigen Löcher des U-Profils 18 von den Stiften 17 durchsetzt werden. Die Gewindeschrauben 14 werden in die Muttern 19 des U-Profils 18 eingeschraubt. Hierdurch ist der Schalungskörper am Hohlkörper 1 fixiert (Fig. 2d, 2e).

Die Einheit aus Schalungskörper 3, 4 und Hohlkörper 1 wird mittels Metallstiften bzw. Nägel 16 an einer Bauteilschalung 20 fixiert, die üblicherweise aus Holzbrettern bzw. Schaltafeln ausgebildet ist. Die Bauteilschalung sollte möglichst schmutzfrei sein, so dass der Schalungskörper 3, 4 ohne Zwischenraum auf der Bauteilschalung befestigt ist (Fig. 2f).

Die Laschen 12 des Hohlkörpers 1 werden soweit nach unten geschoben, bis sie entweder am Bewehrungseisen 21 oder an der Bauteilschalung 20 anstehen (Fig. 2g). Dann werden die Laschen 12 in ihrer Position mittels entsprechender Muttern 19 fixiert.

Danach werden Leerrohre 22 an die Anschluss-Stutzen 11 des Hohlkörpers 1 angeschlossen (Fig. 2h).

Der Hohlkörper 1 wird mittels des Deckels 8 verschlossen (Fig. 2i). Mittels eines Drahtes 23 kann der Hohlkörper 1 am Bewehrungseisen befestigt werden, womit ein unkontrolliertes aufschwimmen beim Betoniervorgang vermieden wird. Der Draht wird vorzugsweise über den Deckel 8 hinweg gespannt, so dass auch ein unbeabsichtigtes Aufgehen des Deckels sicher vermieden wird (Fig. 2j).

Die Bauteilschalung wird mit Beton 24 ausgegossen (Fig. 2k), wobei der Beton das erfindungsgemäße Verschalungssystem 1, 3, 4 umschließt (Fig. 2k). In den Figuren ist die Bauteilschalung 20 jeweils nur auf einer Seite dargestellt, wie es bei Decken üblich ist. Bei einer vertikalen oder geneigten Wand umfasst die Bauteilschalung 20 selbstverständlich zwei in etwa parallele Schalungswandungen. Der Beton härtet in der Bauteilschalung aus..

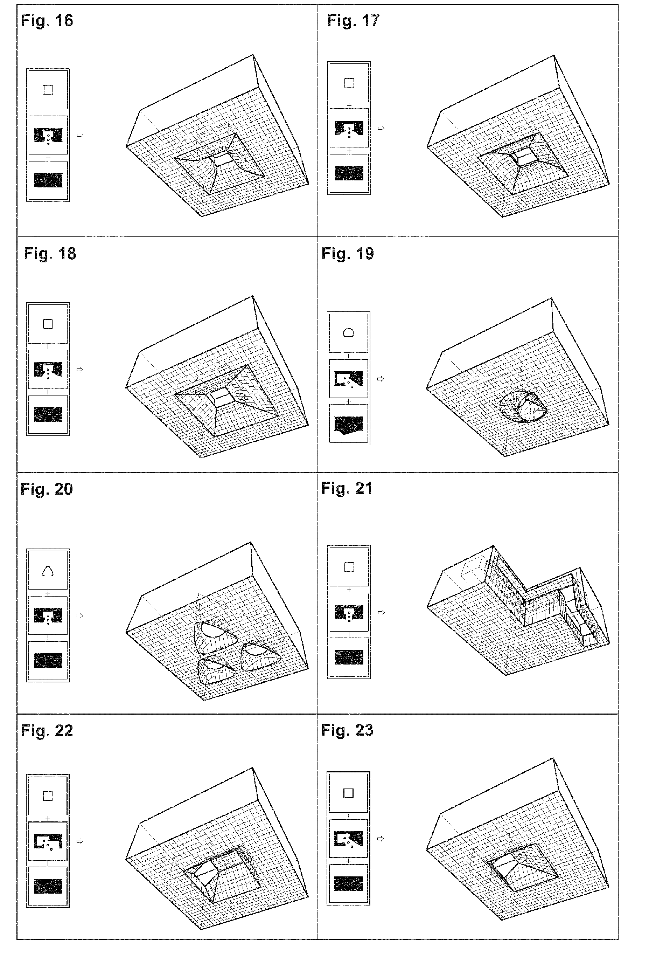

Nach dem Aushärten wird zunächst die Bauteilschalung von der ausgehärteten Betonwand abgenommen. Es ergibt sich dann die in Fig. 21 gezeichnete Ansicht, bei welcher der erfindungsgemäße Schalungskörper 3, 4 in der Betonwand steckt.

Es werden zunächst die Gewindeschrauben 14 entfernt, wodurch der Schalungskörper 3, 4 vom Hohlkörper 1 gelöst ist (Fig. 2m). Danach wird der Schalungskörper von der Betonwand entfernt, indem zunächst der harte Kern 3 herausgezogen wird und danach der weiche Mantel 4 von der Oberfläche der Betonwand gelöst wird (Fig. 2n). Es ist auch möglich, den gesamten Schalungskörper bestehend aus dem harten Kern 3 und dem weichen Mantel 4 auf einmal heraus zu ziehen.

Danach wird das U-Profil 18 von den Stiften 17 abgehoben und durch die Öffnung 9 aus dem Hohlkörper 1 herausgeführt.

Elektrische Leitungen werden durch die Leerrohre 22 eingeführt, aus der Öffnung 9 herausgeführt und mit dem Betriebsgerät 10 elektrisch verbunden. An das Betriebsgerät 10 wird das Leuchtmittel 2 angeschlossen. Dann wird zunächst das Betriebsgerät 10 durch die Öffnung 9 in den Hohlkörper 1 eingesetzt (Fig. 2p). Danach wird das Leuchtmittel 2 in die Öffnung 9 eingeführt (Fig. 2q). Im vorliegenden Ausführungsbeispiel weist das Leuchtmittel einen etwa trichterförmigen Reflektor auf, der mit seinem vorderen Rand formschlüssig an der Öffnung 9 anliegt.

Der Betonabschnitt, der sich von der Öffnung 9 des Hohlkörpers 1 nach außen erstreckt, bildet einen Kanal 25. Der Kanal 25 erstreckt sich bis zu einer Außenfläche 26 der Betonwand. Sowohl die Oberfläche des Kanals 25 als auch die Oberfläche der Außenfläche 26 bilden eine Sichtfläche der Betonwand 5. Man bezeichnet eine solche Betonwand auch als Sichtbeton.

Der Kanal 25 weitet sich trichterförmig von der Öffnung 9 des Hohlkörpers 1 zur Außenfläche 26 hin auf. Der Kanal 25 fungiert somit als Reflektor mit natürlich gegenüber einem üblichen Spiegelreflektor verringerten Reflektionseigenschaften der Betonoberfläche. Die Betonoberfläche des Kanals bewirkt eine diffuse Abstrahlung. Die Oberfläche des Kanals ist somit blendfrei. Da das Leuchtmittel 2 ein Stück von der Außenfläche der Betonwand zurück versetzt ist, strahlt es Licht nur in einem engen, durch den Kanal begrenzten Raumwinkel ab. Ein Betrachter kann somit nur unter einem sehr engen Raumwinkel direkt auf das Leuchtmittel 2 blicken. Außerhalb dieses Raumwinkels kann er somit nicht durch die Leuchte geblendet werden.

Da sich der Kanal 25 ein Stück in die Betonwand hinein erstreckt, sieht ein Betrachter im Wesentlichen nur die Betonoberfläche und eine hell leuchtende Lichtquelle am Boden des Kanals, so dass er den Eindruck hat, dass die Betonwand selbst leuchtet. Diese in die Betonwand 5 integrierte Anordnung mit der Leuchte kann man deshalb auch als Betonleuchte bezeichnen. Der Kanal 25 kann in beliebigen Formen und Tiefen, sofern es die Dicke der Betonwand erlaubt, ausgebildet werden. Zwischen der Oberfläche des Kanals 25 und der Außenfläche 26 der Betonwand gibt es keinen Materialübergang, so dass eine einheitliche durchgehende Betonoberfläche vorliegt. Dies ist aus ästhetischen und architektonischen Gründen bevorzugt.

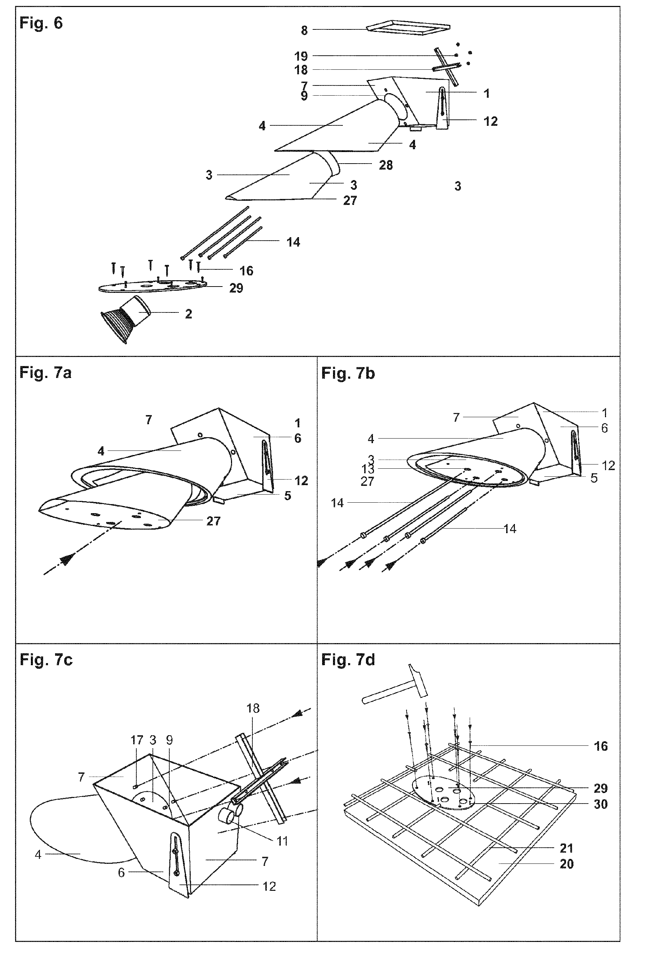

Anhand der Figuren 6 bis 10 wird nachfolgend ein zweites Ausführungsbeispiel der Erfindung erläutert. Dieses Ausführungsbeispiel weist wiederum einen Hohlkörper 1, ein Leuchtmittel 2, einen Schalungskörper mit einem harten Kern 3 und einen weichen Mantel 4, einen Deckel 9 für den Hohlkörper 1 sowie Laschen 12 am Hohlkörper 1 auf. Sofern im Folgenden nichts anderes ausgeführt ist, sind die einzelnen Teile genauso wie im ersten Ausführungsbeispiel ausgebildet und eine entsprechende Beschreibung wird deshalb weggelassen.

Die Form des Hohlkörpers 1 des zweiten Ausführungsbeispiels unterscheidet sich von der Form des Hohlkörpers des ersten Ausführungsbeispiels dahingehend, dass eine der beiden Stirnseitenwandungen 7 geneigt bezüglich der Bodenwandung 5 angeordnet ist. In dieser geneigten Stirnseitenwandung 7 ist die Öffnung 9 zum Einführen des Betriebsgerätes 10, dem Leuchtmittel 2 und zum Austreten von dem von dem Leuchtmittel 2 abgegebenen Licht, ausgebildet.

Der zweiteilige Schalungskörper mit dem harten Kern 3 und dem weichen Mantel 4 hat die Form eines schiefen Kegelstumpfes mit eines Basisfläche 27 in der Form einer Ellipse und einer gegenüberliegenden Endfläche 28 in der Form eines Kreises, die geringfügig größer als die Öffnung 9 in der geneigten Stirnseitenwandung 7 ist.

Der harte Kern 3 des Schalungskörpers weist vier Durchgangslöcher 13 zum Aufnehmen jeweils einer Gewindeschraube 14 auf. Weiterhin sind zwei U-Profile 18 vorgesehen, welche im Kreuz anordbar sind. Die U-Profile 18 weisen an ihren Enden Löcher auf, die mit an der Innenseite der geneigten Stirnseitenwandung 7 ausgebildeten Stiften 17 in Eingriff bringbar sind, so dass ein aus den beiden U-Profilen 18 bestehende Kreuz die Öffnung 9 übergreifend im Hohlkörper 1 ortsfest angeordnet werden kann. In den U-Profilen 18 sind Löcher ausgebildet, welchen jeweils eine Mutter 19 zugeordnet ist, die vorzugsweise mit dem jeweiligen U-Profil fest verbunden ist. In diesen Muttern 19 können die Gewindeschrauben 14 zum Fixieren des Schalungskörpers 3, 4 am Hohlkörper 1 angeschraubt werden.

Das zweite Ausführungsbeispiel dieses Schalungssystem weist zusätzlich eine Basisplatte 29 auf, die etwa die Form der Basisfläche 27 besitzt. Die Basisplatte 29 weist kleine Durchgangslöcher 15 auf, die zum Aufnehmen von kurzen Stiften bzw. Nägeln 17 dienen, um die Basisplatte 29 an einer Bauteilschalung 20 zu Fixieren. An der von der Bauteilschalung 20 abweisenden Seite sind auf der Basisplatte 29 Rastvorsprünge 30 ausgebildet, die mit entsprechenden Rastausnehmungen in der Basisfläche 27 des Schalungskörpers, insbesondere des harten Kerns 3 des Schalungskörpers zusammenwirken. Der Schalungskörper kann auf die Basisplatte 29 aufgesteckt werden, wobei die Rastvorsprünge 30 mit der entsprechenden Rastausnehmung des Schalungskörpers derart zusammenwirken, dass der Schalungskörper fest auf der Basisplatte 29 und damit auch auf der Bauteilschalung 20 fixiert ist.

Anstelle der Rastvorsprünge 33 und entsprechenden Rastausnehmung kann auch jedes beliebige andere Verbindungsmittel zum Verbinden des Schalungskörpers mit der Basisplatte 29 vorgesehen sein, wie z.B. ein Bajonettverschluss, Schraubverbindung, etc.

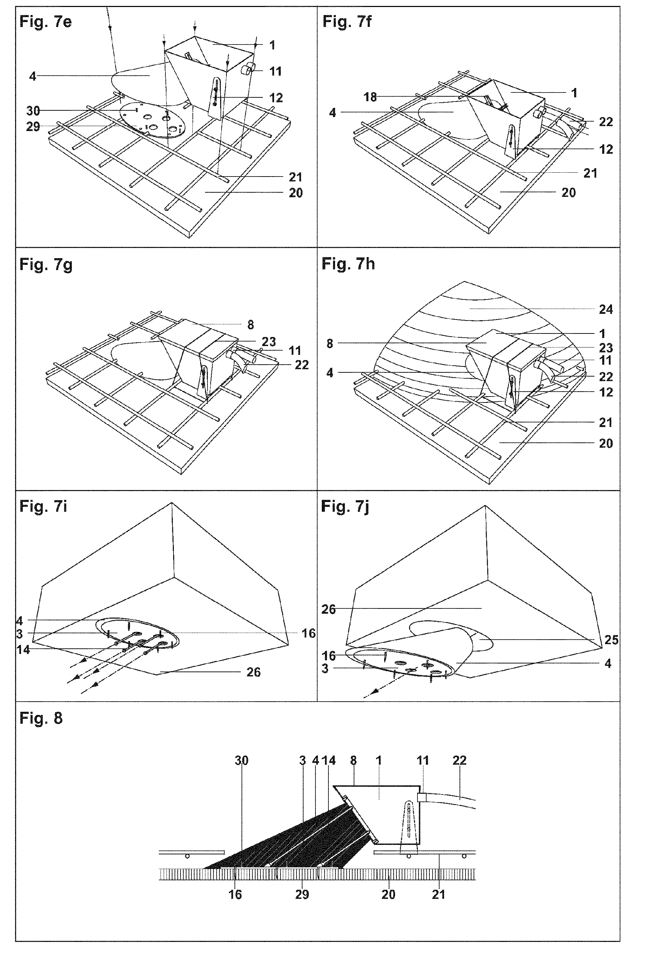

Nachfolgend wird anhand der Figuren 7a bis 7j der Zusammenbau des Schalungssystems und das Herstellen einer Betonwand mit einer integrierten Leuchte kurz erläutert. Die Verfahrensschritte entsprechen im Wesentlichen den oben anhand des ersten Ausführungsbeispiels erläuterten Verfahrensschritten, sofern im Folgenden nicht anders ausgeführt wird.

Der weiche Mantel 4 wird an der Außenseite der geneigten Stirnseitenwandung 7 konzentrisch zur Öffnung 9 angeordnet und der harte Kern wird in den Mantel 4 eingesetzt (Figur 7a). Hierdurch wird die Öffnung 9 verschlossen.

Durch die Durchgangslöcher 13 wird jeweils eine Gewindeschraube 14 gesteckt (Figur 7b). Auf die Innenseite der geneigten Stirnseitenwandung 7 werden die beiden in Form eines Kreuzes angeordneten U-Profile 18 eingesetzt, so dass sie mit ihren endseitigen Löchern von den Stiften 17 durchgriffen werden. Die Gewindeschrauben 14 werden in die Muttern 19 eingeschraubt, so dass der Schalungskörper fest mit dem Hohlkörper 1 verbunden ist.

Die Basisplatte 29 wird auf der Bauteilschalung 20 mittels der Metallstifte 16 befestigt (Fig. 7d). An den Rastvorsprüngen 30 der Basisplatte 29 wird der Schalungskörper mit seiner Basisfläche 27 aufgesetzt und mittels der Rastmittel bestehend aus den Rastvorsprüngen 30 und den entsprechenden Rastöffnungen im harten Kern 3 des Schalungskörpers mit der Bauteilschalung 20 verbunden (Figur 7e).

Die Laschen 12 werden an die Höhe des Bewehrungseisens 21 angepasst. An die Anschluss-Stutzen 11 werden Leerrohre 22 angesetzt (Figur 7f). Danach wird der Deckel 8 aufgesetzt und der Hohlkörper 1 wird mit einem Draht 23 an dem Bewehrungseisen 21 fixiert, wobei gleichzeitig der Deckel 8 auf dem Hohlkörper 1 gehalten wird.

Die Bauteilschalung wird mit Beton 24 ausgegossen (Figur 7h), wobei das erfindungsgemäße Schalungssystem von Beton umschlossen wird. Der Beton härtet in der Bauteilschalung 20 aus.

Nach dem Aushärten wird zunächst die Bauteilschalung von der ausgehärteten Betonwand abgenommen. Es ergibt sich dann die in Figur 7i gezeichnete Ansicht, bei welcher der Schalungskörper 3, 4 in der Betonwand steckt. Die Basisplatte 29 wurde zusammen mit der Bauteilschalung 20 von der Betonwand entfernt. Die Gewindeschrauben 14 werden herausgeschraubt, wodurch der Schalungskörper 3, 4 vom Hohlkörper 1 gelöst wird. Danach wird der Schalungskörper von der Betonwand entfernt, indem zunächst der harte Kern 3 herausgezogen wird und danach der weiche Mantel 4 von der Oberfläche der Betonwand gelöst wird (Figur 7j).

Die beiden U-Profile 18 werden von den Stiften 17 abgehoben und durch die Öffnung 9 aus dem Hohlkörper 1 herausgeführt. Genauso wie beim ersten Ausführungsbeispiel, werden ein Betriebsgerät 10 und das Leuchtmittel 2 an die entsprechenden elektrischen Leitungen angeschlossen und in den Hohlkörper 1 eingesetzt.

Aufgrund des schräg angeordneten Schalungskörpers 3, 4 ergibt sich ein gegenüber der Außenfläche 26 der Betonwand schräg verlaufender Kanal 25, der sich von der Öffnung 9 des Hohlkörpers 1 zur Außenfläche 26 hin aufweitet. Da der Schalungskörper ein Kegelstumpf ist, weist dieser Kanal 25 eine kreisförmige Querschnittsfläche auf. Im Rahmen der Erfindung kann der Kanal 25 auch mit anderen Querschnittsformen und anderen Profilen im Querschnitt ausgebildet sein. Hierzu werden unterschiedliche Beispiele weiter unten aufgeführt.

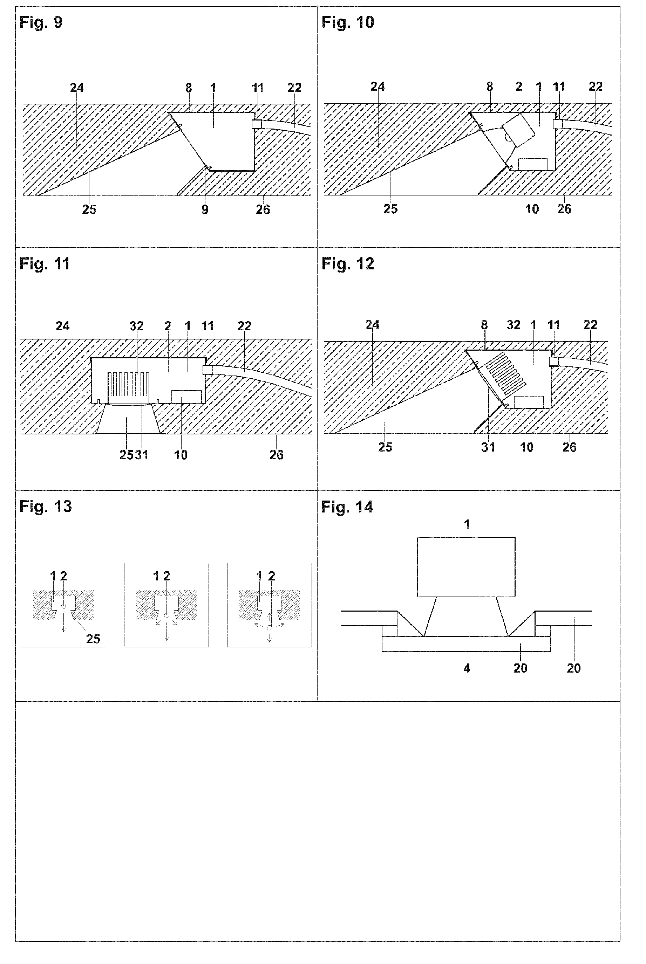

Figur 11 zeigt eine Abwandlung des ersten Ausführungsbeispiels, bei dem als Leuchte ein Leuchtdiodenarray 31 eingesetzt ist. Auf der Rückseite des Leuchtdiodenarrays ist ein Kühlkörper 32 angeordnet. Es sind Leuchtdiodenarrays am Markt erhältlich, die einen Großteil ihres Lichtes innerhalb eines Bereiches von +/-60° um die optische Achse des Leuchtdiodenarrays 31 abstrahlen. Am Randbereich ist die Leuchtstärke geringer als im Zentrum. Hierdurch kann das meiste Licht ungehindert aus dem Kanal 25 austreten. Die Oberfläche des Kanals wird jedoch mit relativ geringer Lichtstärke angestrahlt, so dass sie für einen Betrachter gut sichtbar ist. Zudem hat ein solches Leuchtdiodenarray 31 eine sehr geringe Bauhöhe. Der Kühlkörper 32 kann auch an die spezielle Form des Hohlkörpers 1 angepasst werden. Insbesondere ist es zweckmäßig zwischen dem Leuchtdiodenarray 31 und der Öffnung 9 eine oder mehrere Durchgänge vorzusehen, so dass ein Luftaustausch der Luft im Innenraum des Hohlkörpers 1 mit der Umgebung möglich ist.

Solche Durchgänge können selbstverständlich auch bei herkömmlichen Leuchten, die keine Leuchtdioden aufweisen, vorgesehen werden.

Es können auch separate Belüftungsöffnungen ausgebildet werden, indem mit dem Hohlkörper kommunizierend verbundene Schläuche oder Rohrelemente mit z.B. kreisförmigen oder rechteckigen Querschnitt bis zur Bauteilschalung geführt werden und so einen in den Hohlkörper führenden Belüftungsschacht in der fertigen Betonwand begrenzen.

Figur 12 zeigt ein drittes Ausführungsbeispiel mit schrägem Kanal und Leuchdioden-array 31 und dem Kühlkörper 32.

Bei den oben dargestellten Ausführungsbeispielen ist das Leuchtmittel 2 im Hohlkörper 1 angeordnet. Im Rahmen der Erfindung ist es auch möglich, das Leuchtmittel 2 im Hohlkörper 1, im Kanal 25 oder sogar außerhalb des Kanals 25 anzuordnen (Figur 13).

Bei den oben erläuterten Ausführungsbeispielen ist die Bauteilschalung 20 ebenflächig ausgebildet. Die Bauteilschalung kann jedoch auch uneben ausgebildet sein, was insbesondere im Bereich des Kanals 25 zweckmäßig sein kann, um den Kanal 25 in den Raum zu verlängern. Figur 14 und 19 zeigen schematisch eine derart unebene Bauteilschalung.

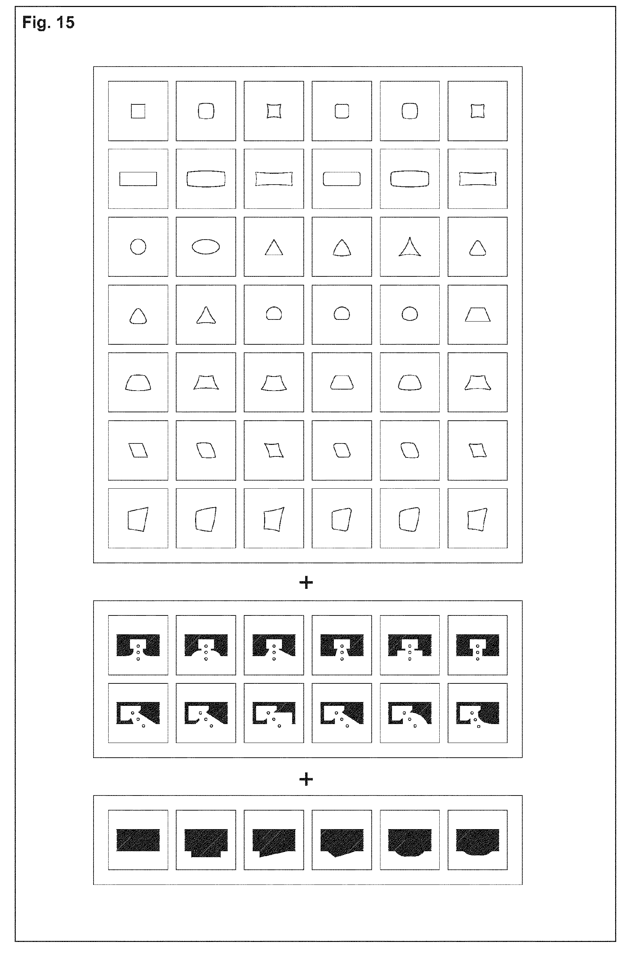

Figur 15 zeigt schematisch unterschiedliche Grundrissformen der Kanäle, die mit unterschiedlichen Querschnittsformen der Kanäle und ebenen bzw. unebenen Bauteilschalungen kombinierbar sind. Die unterschiedlichen Querschnittsformen zeigen jeweils unterschiedliche Querschnittsprofile des Kanals 25. Die unterschiedlichen Bauteilschalungen ergeben unterschiedliche Oberflächen, die im Bereich des Kanals 25 ausgebildet sein können. Grundsätzlich ist eine jede Grundrissform mit einer jeden Querschnittsform und einer jeden Bauteilschalung kombinierbar. Hierdurch lassen sich eine Vielzahl unterschiedlicher Kanalformen erzeugen. In den Figuren 16 bis 21 sind einige wenige Beispiele schematisch dargestellt, wobei bei diesen Figuren jeweils am linken Rand die Kombination der Grundrissform, Querschnittsform und Bauteilschalung aufgezeigt ist und rechts daneben in einem Gittermuster die Oberfläche der Betonwand mit dem Kanal 25 gezeigt ist, die sich bei dieser Kombination ergibt. Vorzugsweise ist der Übergang zwischen der Außenfläche 26 der Betonwand und der Innenfläche des Kanals 25 stetig und vorzugsweise ohne Kante, d.h. dass die ersten Ableitungen im Bereich des Überganges auch stetig sind. Eine solche Ausführungsform ist beispielsweise in Figur 16 dargestellt.

Im Rahmen der Erfindung ist es auch möglich, die Öffnung 9 langgestreckt, schlitzförmig und/oder abgewinkelt auszubilden. Figur 21 zeigt ein entsprechendes Ausführungsbeispiel.

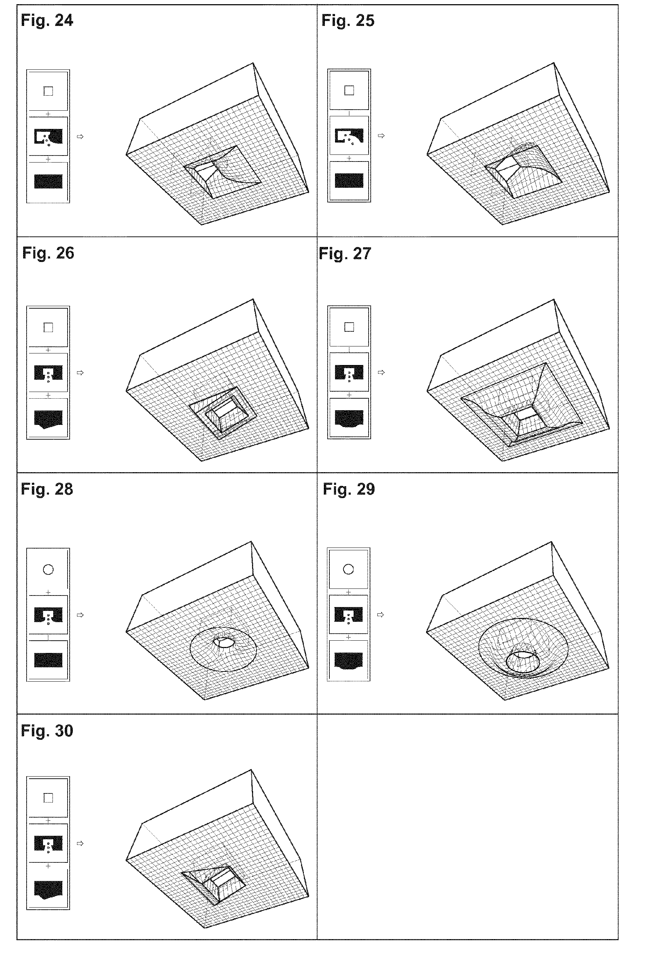

Die Figuren 22 bis 30 zeigen jeweils weitere Ausgestaltungen der Leuchten mit unterschiedlich geformten Kanälen. Mit dem erfindungsgemäßen System können somit an sich beliebig geformte (Freiformflächen) Kanäle erzeugt werden.

Bei dem oben erläuterten Ausführungsbeispielen sind die Halteelemente in Form der UProfile 18 unmittelbar auf der Innenfläche der Wandung des Hohlkörpers 1 aufgesetzt, in der die Öffnung 9 eingebracht ist. Es kann jedoch zweckmäßig sein, diese Halteelemente mit einem geringen Abstand zur Innenfläche der jeweiligen Wandung anzuordnen. Hierzu sind beispielsweise kleine Sockel unter den Stiften 17 auszubilden, auf welchen die Halteelemente 18 aufliegen. Hierdurch kann der sich verjüngende bzw. konisch zulaufende Schalungskörper ein Stück in die Öffnung 9 hineingezogen werden, wodurch die Kante der Öffnung 9 abgedichtet wird und dennoch der Schalungskörper nicht die Außenfläche dieser Wandung abdeckt. Hierdurch wird sichergestellt, dass diese Wandung vollständig mit Beton abgedeckt wird und nach dem Aushärten der Betonwand nicht mehr sichtbar ist.

Oben sind Belüftungsschächte beschrieben, die durch einen Luftaustausch mit der Umgebung die Kühlung der Leuchte verbessern. Im Rahmen der Erfindung ist es auch möglich, die Leuchte bzw. mit der Leuchte verbundene Kühlkörper in thermischen Kontakt mit in den Beton eingebetteten Wärmeleitern zu bringen. Hierdurch wird die Wärme der Leuchte in den Beton eingetragen, der eine hohe Wärmekapazität besitzt. Als Wärmeleiter können insbesondere Metallstäbe, z.B. aus Aluminium oder Kupfer, vorgesehen werden. Es ist auch möglich als Wärmeleiter die Eisenbewehrung des Betons zu verwenden. Dies hat den Vorteil, dass sich die Eisenbewehrung in der Regel über die gesamte oder zumindest einen Großteil der Betonwand erstreckt und so eine großflächige Verteilung der Wärme der Leuchte möglich ist.

Weiterhin kann ein transparenter Ring, der mit einer vorbestimmten Farbe eingefärbt ist, derart um das Leuchtmittel 2 angeordnet sein, dass der Kanal 25 mit dieser Farbe ausgeleuchtet wird. Hierdurch leuchtet der Kanal 25 in der Farbe des Ringes. Der Ring kann aus einem transparenten, temperaturstabilen Kunststoff oder Glas ausgebildet sein. Dies ist besonders zweckmäßig in Verbindung mit einem Leuchtdiodenarray, da dieses den Kanal optimal ausleuchtet.

Der erfindungsgemäße Schalungskörper mit einem harten Kern und einem weichen Mantel kann auch zum Ausbilden eines Kanals zum Aufnehmen eines Tasters von einem Schalter, Steckdosen, Brandmelder oder Bewegungsmelder vorgesehen werden. Diese Geräte können rahmenlos in der Betonwand angeordnet werden, wobei hier der Kanal eher kurz zu halten ist, und eine Tiefe von z.B. 5 mm bis 15 mm aufweist.

Weiterhin können mit dem erfindungsgemäßen Schalungskörper mit einem harten Kern und einem weichen Mantel Kanäle für Audioanlagen und Lüftungen in einer Betonwand geschaffen werden. Diese Kanäle sind mit einer Tiefe von z.B. 5 cm bis 15 cm auszubilden.

Im Folgenden werden weitere Ausführungsbeispiele erläutert. Gleiche Teile sind mit den gleichen Bezugszeichen wie in den oben erläuterten Ausführungsbeispielen bezeichnet. Für diese Teile gelten die obigen Ausführungen, sofern keine abweichenden Erläuterungen folgen.

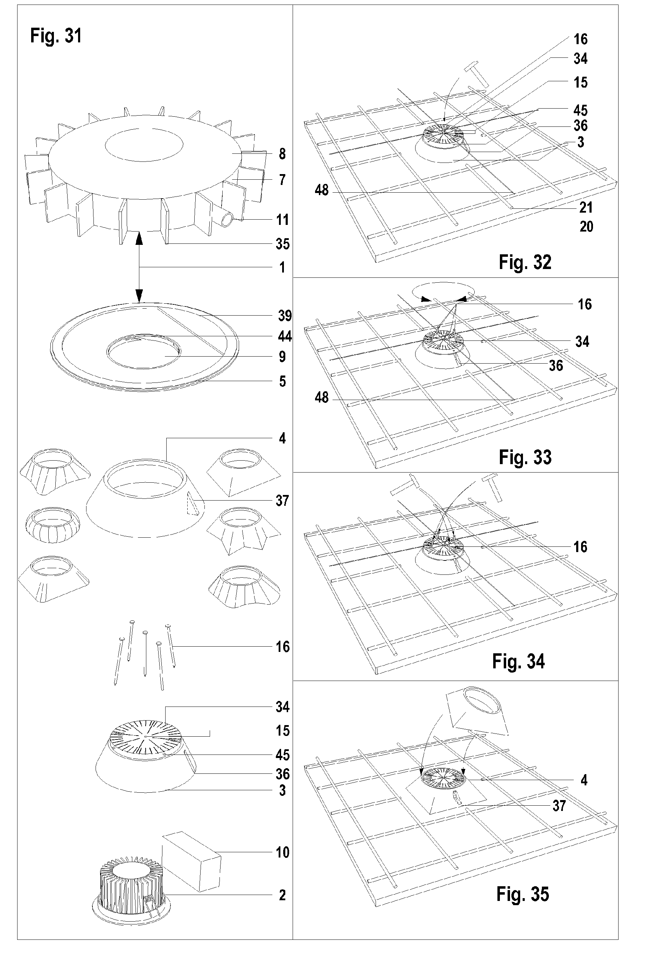

Der Hohlkörper 1 (Fig. 31) kann aus einem Deckel 8 mit Stirnseitenwandung 7 und einem Boden mit Bodenwandung 5, einer Halterung für ein Betriebsgerät 39 und der Öffnung 9, an welche ein Ring mit Schlitzen 44 für einen Bajonettverschluss ausgebildet sein. Der Bajonettverschluss, mit einer Schlitzung nach oben Richtung Deckel oder nach unten Richtung harter Kern geöffnet, stellt ein alternatives Befestigungsmittel zur Gewindeschraube 14, dem U-Profil 18 und der Mutter 19 der oben erläuterten Ausführungsbeispiele dar.

Der Deckel 8 mit seinen Stirnseitenwandung 7 einerseits und der Boden mit der Bodenwandung 5 und der Öffnung 9 andererseits können entweder als zwei separate Teile oder verbunden als ein Teil eingesetzt werden. Diese Kombination kann kistenförmig aus gekantetem Blech (siehe Fig. 1), rotationssymmetrisch aus gedrücktem Blech, aus gespritztem Kunststoff oder gedrehtem oder druckgegossenem Aluminium (siehe Fig. 31), stranggepresst aus Aluminium, lasergesintert oder 3D-geplottet aus Kunststoff gefertigt sein. Weiterhin kann auch statt der dargestellten Lösungen ein marktübliches Betoneinbaugehäuse mit einem speziell gefertigten Anschlussstutzen für den harten Kern 3 und den weichen Mantel 4 eingesetzt werden.

Der Deckel 8 kann an der Stirnseitenwandung Kühlrippen 35 aufweisen, welche im einbetonierten Endzustand vom Beton umschlossen werden. Über diese Kühlrippen wird die durch das Leuchtmittel 2 und das Betriebsgerät 10 erzeugte Wärme im Holkörper an den umgebenden Beton abgegeben. Diese Kühlrippen können mit der Bauteilbewehrung verbunden sein, wodurch eine gute Ableitung der Wärme erzielt wird.

An der Stirnseitenwandung 7 befindet sich der Anschluss-Stutzen 11 für das ElektroLeerrohr.

Der Deckel 8 mit Stirnseitenwandung (incl. Kühlrippen) und Boden kann aus Kunststoff, aus Aluminium mit einer Schutzbeschichtung (als Schutz vor Korrosion beim Abbindevorgang des Betons) oder aus Stahl gefertigt sein.

Kunststoff ist mittels Spritzgussverfahren günstig industriell fertigbar, mittels 3D-Plot oder lasergesintert in jede Form in geringer Stückzahl individuell herstellbar, jedoch teuer. Kunststoff weist eine schlechte Wärmeleitfähigkeit auf und ist spröde bei kalten Temperaturen.

Aluminium ist mittels Druckgussverfahren oder mittels Strangpressverfahren günstig industriell fertigbar, weist eine gute Wärmeleitfähigkeit auf. Es ist zweckmäßig eine Schutzbeschichtung vorzusehen.

Stahl hat in etwa den gleichen Wärmedehnungskoeffizient wie Beton, eine gute Wärmeleitfähigkeit, ist jedoch vergleichsweise (zu Kunststoff und Aluminium) aufwändig in der Herstellung mittels Blechkantung oder Blechdrücken.

Der weiche Mantel 4 ist das formgebende Element des Kanals 25. Die innere, dem harten Kern 3 zugewandte, Seite kann immer gleich ausgebildet sein. An der inneren Seite ist vorzugsweise eine Ausstülpung 37 für die Arretierung mit dem harten Kern vorgesehen.

Die äußere (dem Beton zugewandte) Seite kann symmetrisch oder freigeformt (mit runden Kanten, mit eckigen Kanten, vieleckig, geschwungen, sternförmig, mit Hinterschnitt etc.) ausgebildet sein.

Der harte Kern 3 hat an der Oberseite Einkerbungen, Erhebungen oder aufgedruckte Markierungen (Winkelskala 34) in regelmäßigen Gradabständen, ähnlich der Darstellung der Himmelsrichtungen. Diese dienen der Ausrichtung des Verschalungssystems auf einer Bauteilschalung.

An der äußeren (dem weichen Mantel zugewandte) Seite befindet sich eine Einkerbung 36 als Gegenstück zur Ausstülpung an der Innenseite des weichen Mantels. Dies dient der Arretierung des weichen Mantels mit dem harten Kern und wirkt dem Verdrehen der beiden Elemente zueinander entgegen.

Der harte Kern hat ein zentrales vertikales Durchgangsloch 15 für die positionsgenaue Befestigung des Verschalungssystems auf einer Bauteilschalung, sowie schräg geführte Durchgangslöcher für eine in alle Richtungen verspreizte Befestigung, die unten näher anhand Fig 34 erläutert wird.

Seitliche Bolzen 45 dienen zur Befestigung des harten Kerns an einem Ring 44 an der Bodenwandung 5 (Bajonettverschluss).

Der harte Kern 3 kann vorzugsweise aus Kunststoff (z.B. POMC oder PU), aus Holz, aus Stahl oder Aluminium gefertigt sein.

Der Leuchteneinsatz umfassend das Leuchtmittel (2) und das Betriebsgerät (10) ist entweder ein marktübliches, frei erhältliches System, welches mittels Federklammern bzw marktüblichen Befestigungssystemen im Hohlkörper befestigt wird, oder ein spezifisch ausgebildeter Leuchteneinsatz, welcher thermisch an Deckel und/oder Boden angebunden im Hohlkörper befestigbar ist (z.B. mittels Bajonett-, Clip-, Schnappverschluß, etc.) und über die direkte Anbindung die Wärme an das Gehäuse/Hohlkörper und somit an den Beton abgibt. Eine weitere Befestigungsmöglichkeit des Leuchteneinsatzes mit dem Hohlkörper ist der Einsatz von Magneten. Dazu muss entweder ein Teil des Leuchteneinsatzes oder ein Teil des Hohlkörpers (vorzugsweise im Bereich des Deckels oder im Bereich der Öffnung) aus Stahl oder einem anderen magnetischen Material gefertigt sein. Der gegenüberliegende Teil ist mit Magneten ausgestattet. Beispielsweise durch ein Verdrehen oder Kippen des Leuchteneinsatzes wird die Magnetverbindung für die Demontage der Leuchte aufgelöst.

Bei der Montage wird der harte Kern 3 auf/an der Bauteilschalung positioniert (Fig. 32). Der Mittelpunkt des harten Kerns wird am Kreuzungspunkt des Bezugssystems (ermittelt durch ein Schnurgerüst oder ein Laser-Positionierungs-System 48) ausgerichtet. Danach wird der harte Kern mit einem Nagel 16 durch das vertikale zentrale Loch auf der Bauteilschalung befestigt. Das Element ist noch frei drehbar, der Mittelpunkt befindet sich jedoch an der definierten korrekten Stelle.

Der harte Kern 3 wird so gedreht (Fig. 33), dass die Winkelskala 34 bezogen auf das Bezugssystem 48 an der richtigen Stelle positioniert und die korrekte Drehposition hat. Die Einkerbung 36 befindet sich nun an der korrekten Position.

Der harte Kern 3 wird mit Nägeln durch die schräg geführten Löcher auf die Bauteilschalung genagelt und somit gegen Verdrehen und Aufschwimmen fixiert )Fig. 34). Die Nägel sollten für eine optimale Verbindung mit der Bauteilschalung horizontale Kerbungen haben. Die schräg geführten Löcher wirken gegen ein ungewolltes Aufschwimmen des gesamten Verschalungssystems während des Betoniervorgangs.

Der weiche Mantel 4 wird auf den harten Kern 3 so aufgestülpt, dass die Ausstülpung des Mantels 37 in der Einkerbung des Kerns einrastet (Fig. 35).

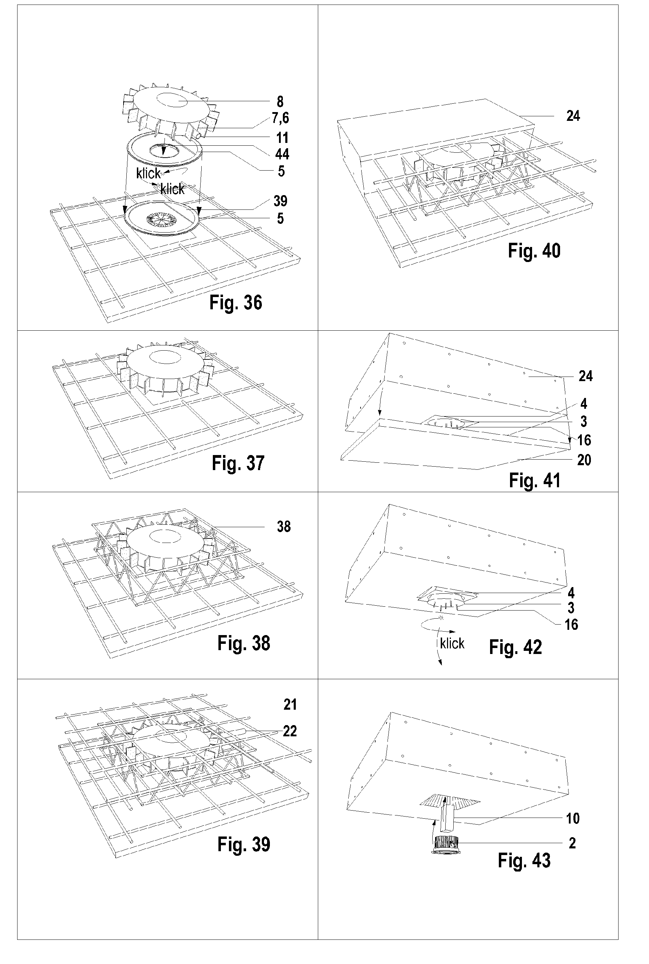

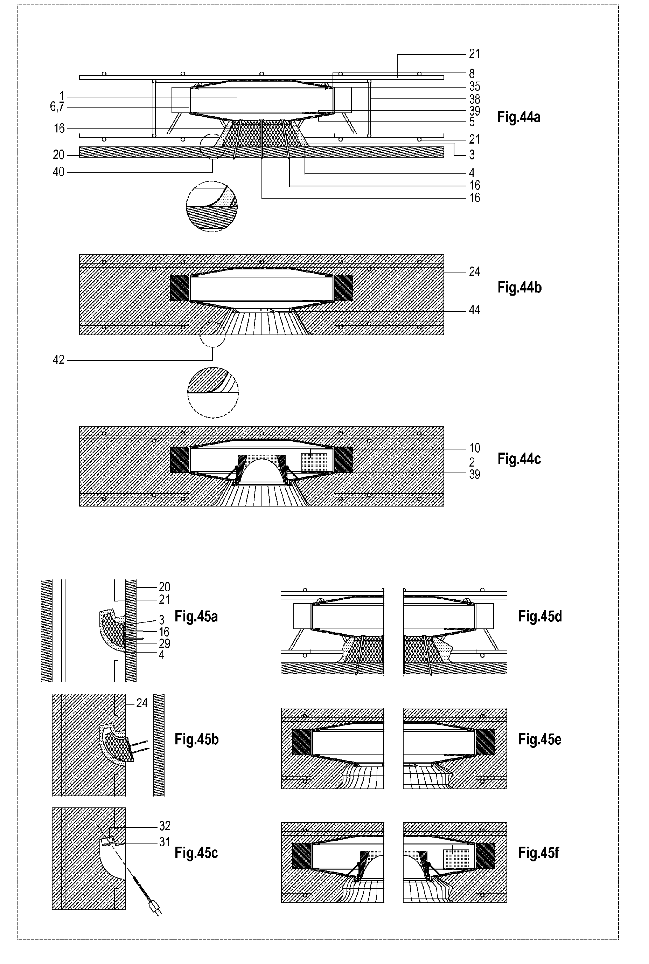

Der Hohlkörper 1 wird mittels Bajonettverschluss auf den harten Kern mit weichem Mantel aufgeklickt (Fig. 36). Die Bodenwandung ist von der Öffnung 9 bis zum Anschluss der Stirnseitenwandung 7 des Deckels derart schräg verlaufend ausgebildet, dass während des Betoniervorgangs die eingeschlossene Luft um das Gehäuse verbessert nach oben entweichen kann. Somit wird der Verbleib von sog. Betonnestern um die Öffnung und um den weichen Mantel bestmöglich vermieden (siehe auch Fig. 44).

Das Schalungssystem aus Fig. 31 ist somit auf eine Bauteilschalung montiert (Fig. 37).

Um das Schalungssystem wird eine Schutzbewehrung 38, bestehend aus oberem und unterem Rundeisen mit diagonaler Trennlage, auf die untere/linke Bewehrungslage angebracht (Fig. 38). Diese dient als Distanzhalter zwischen oberer und unterer (Decke) bzw. linker und rechter (Wand) Bewehrung 21 des Betonbauteils.

Das Leerrohr 22 wird an der Stirnseitenwandung des Hohlkörpers angebracht (Fig. 39). Die Vorbereitungen am Verschalungssystem vor dem Betoniervorgang sind somit abgeschlossen.

Vor dem Betoniervorgang wird vom Betonier-Personal die obere/rechte Bewehrungslage in die Bauteilschalung gelegt und mit der Schutzbewehrung verbunden.

### Fig. 40 zeigt den Betoniervorgang

Nach dem Aushärten des Betons wird die Bauteilschalung (20) entfernt und das Verschalungssystem freigelegt (Fig. 41). Dabei verbiegen sich die schräg geführten Metallstifte 16, mit welchem das Verschalungssystem auf der Bauteilschalung befestigt wurde, in die vertikale Richtung.

Der Bajonettverschluss wird über Verdrehen des harten Kerns gelöst (Fig. 42). Dabei werden die herausstehenden Nägel als Hebelansatz genutzt. Der weiche Mantel löst sich durch einen sehr geringen Kraftaufwand, ohne Einsatz von Werkzeug oder sonstigen Hilfsmitteln.

Durch das Leerrohr wird der Elektro-Anschluss in den Hohlkörper geführt (Fig. 43). Das Betriebsgerät wird mit dem Elektro-Anschluss verbunden. Das Leuchtmittel wird mit dem Betriebsgerät verbunden. Das Betriebsgerät wird durch die Öffnung 9 in den Hohlkörper geführt und dort horizontal auf der Halterung 39 im Hohlraum aufgestellt. Das Leuchtmittel wird an der Öffnung 9 oder am Deckel 8 mit dem Hohlkörper verbunden (Verbindung Leuchteneinsatz mit Hohlkörper siehe Erläuterung unter Fig. 31)

Fig. 44a zeigt das fertig zusammengesetzte und auf eine Bauteilschalung montierte Schalungssystem vor dem Betoniervorgang. Fig. 44b zeigt das Verschalungssystem nach dem Betoniervorgang, nachdem die Bauteilschalung, der harte Kern und der weiche Mantel entfernt wurden. Fig. 44c zeigt das Verschalungssystem mit eingesetztem Betriebsgerät und Leuchteneinsatz.

Für eine verbesserte Kantenausbildung zwischen Kanal 25 und Beton-Bauteil-Unterseite ist die untere Kante des weichen Mantels mit einer leichten Fase 40 ausgebildet. Diese Fase hat vorzugsweise einen Radius zwischen 5 und 30 mm.

Fig. 45a, 45b, 45c zeigen eine weitere Einsatzmöglichkeit des erfindungsgemäßen Verschalungssystems. Hier wird durch das Schalungssystem im Betonbauteil eine Einkerbung erzeugt, ohne dass dabei ein Hohlkörper einbetoniert wird. In die Einkerbung wird nach dem Betoniervorgang ein Leuchtmittel eingesetzt. Die Einkerbung (Kanal 25) kann an sich beliebig geformt sein, insbesondere punkt- bzw. kreisförmig und auch linear bzw. langgestreckt ausgebildet sein. Dieses Ausführungsbeispiel stellt einen eigenständigen Erfindungsgedanken dar.

Fig. 45d, 45e, 45f zeigen jeweils zwei unterschiedliche Ausformungen des weichen Mantels in unterschiedlichen Einbauzuständen. Beide Formen erzeugen im Beton einen Hinterschnitt. Diese Ausformung des Kanals kann durch die Kombination eines harten Kerns mit einem weichen Mantel bzw. grundsätzlich mit einem 2-teiligen Schalungssystem erfolgen.

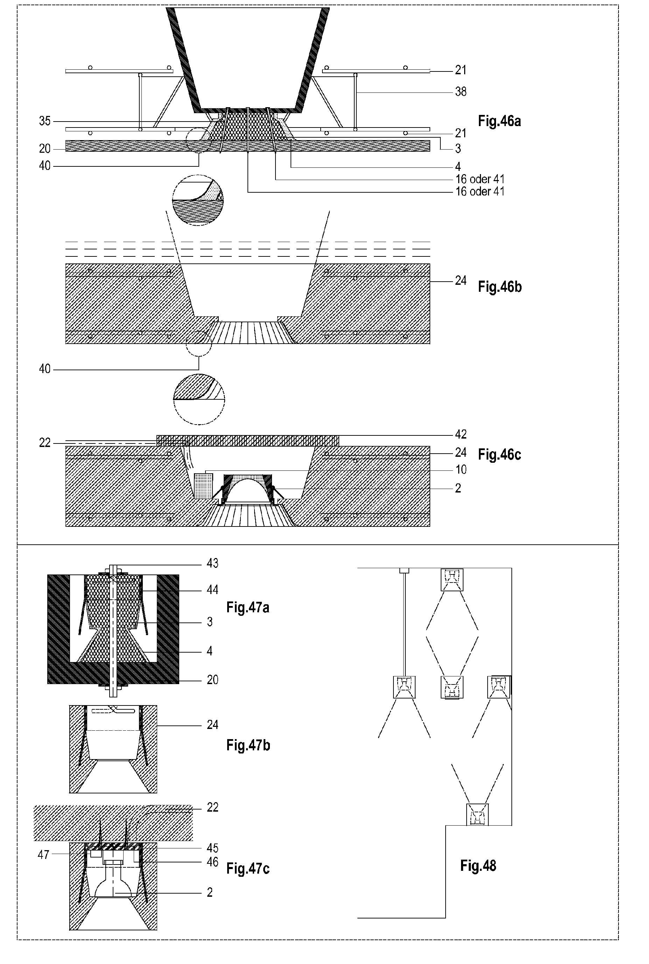

Fig. 46a bis 46c zeigen die Herstellung eines Deckendurchbruchs durch eine Betondecke für den Einsatz einer Leuchte in einem Bauteil aus Beton. Der Deckendurchbruch wird nach dem Prinzip des erfindungsgemäßen Verschalungssystems hergestellt. Dabei wird der Hohlkörper 1 durch eine oben offene, trichterartige Form mit Stirn- und Längsseitenwandung und mit einer Bodenwandung (ohne Öffnung!), ersetzt. Diese Form ist derart hoch, dass die Oberkante auf jeden Fall höher als die Oberkante des Beton-Bauteils ist. Somit wird vermieden, dass Beton in die oben offene Form gelangt. Der Aufbau des dargestellten Deckendurchbruchs ist ansonsten identisch zu dem erfindungsgemäßen Verschalungssystem (mit hartem Kern, weichem Mantel, Befestigung auf Bauteilschalung, Schutzbewehrung). Nach dem Betoniervorgang und dem Entfernen der Bauteilschalung werden der harte Kern und der weiche Mantel entfernt. Danach wird die oben offene Trichterform von der Oberseite des Beton-Bauteils entfernt. Es verbleibt kein Körper/Gegenstand im Betonbauteil. Danach wird der Elektro-Anschluss zum Deckendurchbruch geführt (von oben) und der Leuchteneinsatz eingesetzt (von unten). Das Betriebsgerät wird mit dem Leuchteneinsatz verbunden und auf die durch das Verschalungssystem gebildete horizontale Fläche gelegt. Schlussendlich wird zum Schutz des Leuchteneinsatzes auf den Deckendurchbruch eine Platte 42 gelegt, vorzugsweise aus Holz oder bei Brandschutzanforderungen aus einem brandbeständigen Material. Die Fuge zwischen Platte und Betonbauteil wird mit einer Dichtmasse abgedichtet. Danach können die üblichen Arbeitsgänge für die Fertigstellung des Bauteils fortgeführt werden (z.B. Folienabdichtung, Verlegung von Dämmmaterial, Aufbringen von Schüttungen, Estrich usw.).

Der Vorteil des Deckendurchbruchs ist die leicht auszuführende Elektro-Verkabelung von oben und die Wiederverwendbarkeit aller Komponenten des Verschalungssystems. Des weiteren kann das Verschalungssystem statt mit Metallstiften 16 mit Schrauben 41 auf der Bauteilschalung befestigt werden. Dies erhöht die Stabilität des Verschalungssystems und sorgt verbessert dafür, dass das Verschalungssystem während des Betoniervorgangs an der korrekten Stelle verbleibt. Diese Schrauben können nach dem Aushärten des Betons von oben wieder gelöst werden.

Fig. 47a bis 47c zeigen die verschiedenen Produktionsschritte für die Herstellung einer Einzelleuchte (als Beispiel eine Betonleuchte in Würfelform mit symmetrischen Kantenlängen), hergestellt mit dem Prinzip des erfindungsgemäßen Verschalungssystems.

Fig. 47a zeigt die Fixierung einer Formenkombination aus zwei harten Kernen und zwei weichen Mänteln mittels Gewindestange und Muttern 43 in einer Schalung 20. Um den oberen weichen Mantel wird ein zylinderförmiger Ring 44 mit seitlichen Schlitzungen (für einen Bajonettverschluss) und Betonverankerungen geklemmt.

Diese Betonverankerungen werden beim Betoniervorgang vom Beton umflossen und sorgen schlussendlich für eine kraftschlüssige Verbindung zwischen Beton und Ring. Nach dem Betoniervorgang wird die untere und seitliche Schalung entfernt (Fig. 47b), die Kerne und Mäntel aus dem Beton gezogen. Fig. 47b zeigt die Betonform mit Ring und eingegossenen Betonverankerungen nach dem Ausschalen. Fig. 47c zeigt die an eine Decke montierte Einzelleuchte. Eine Grundplatte 46 mit Stromklemme 47, Leuchtmittelfassung und seitlichen Bolzen 45, für einen Bajonettverschluss wird mittels Schrauben an der Decke befestigt. Nach dem Anschluss der Leuchte mittels Stromklemme wird die Betonform mittels Bajonettverschluss mit der Deckenbefestigung verbunden.

Unter Zugabe von Farbpigmenten kann der Beton für die Beton-Einzelleuchte eingefärbt werden. Die Betonoberfläche kann nach dem Ausschalen gewaschen, geschliffen, poliert usw. werden.

Die Einzelleuchte aus den Figur 47a bis 47c kann an und auf gerade und schräg verlaufenden Decken, Böden und Wänden montiert werden (Fig. 48). Dabei kann die Einzelleuchte nach oben oder unten strahlend, abgependelt oder direkt auf den Bauteil, starr, drehbar und/oder schwenkbar eingesetzt werden. Die Leuchte ist einzeln und in Gruppen, im Innenund Außenraum einsetzbar.

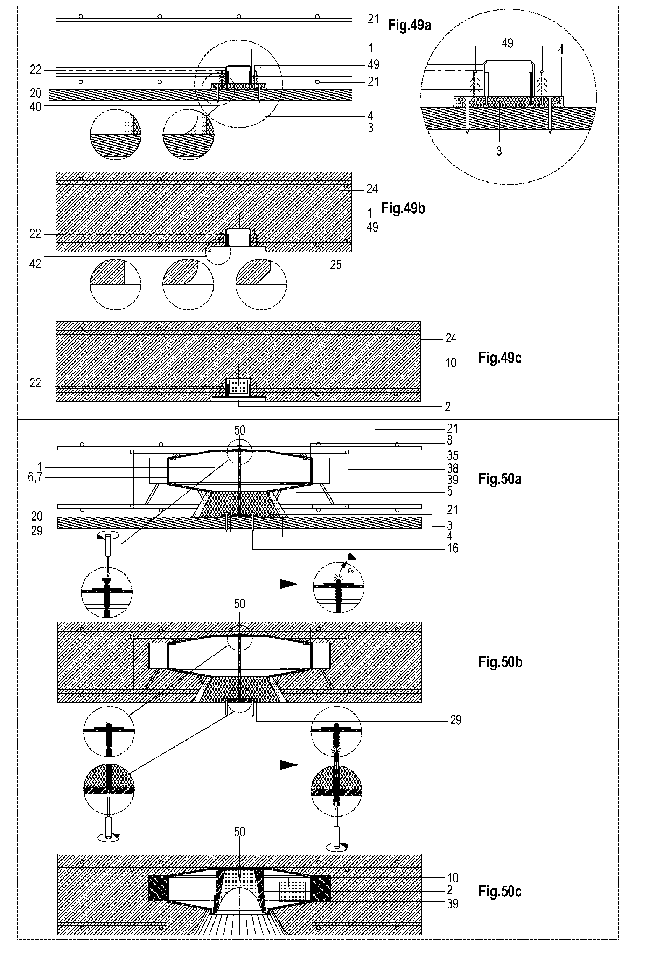

Fig. 49a, Fig. 49b, Fig. 49c zeigen das erfindungsgemäße Schalungssystem in einer Variante, bei der der Leuchteneinsatz größer als der im Beton verbleibende Hohlkörper 1 ist. Der Hohlkörper besteht aus einer marktüblichen Betoneinbaudose für beispielsweise Lichtschalter. Diese wird mit dem harten Schalungselement 3 von der der Bauteilschalung zugewandten Seite verschraubt. Von dieser Seite werden auch Schrauben durch den harten Kern in einen dahinterliegenden Sicherheitsdübel 49 geschraubt. Dieser Dübel wird beim Betoniervorgang von Beton umflossen und sorgt dafür, dass das Verschalungssystem beim Entfernen der Bauteilschalung 20 am Betonbauteil verbleibt und nicht versehentlich beschädigt wird. Der weiche Mantel 4 wird durch die dargestellte Form an der dem harten Kern zugewandten Seite auf die Bauteilschalung geklemmt. Die dem Beton zugewandte Seite des weichen Mantels kann an der Unterseite für eine verbesserte Kantenausbildung eine leichte runde oder gekantete Fase aufweisen 40.

Fig. 49b zeigt das Verschalungssystem nach dem Entfernen der Bauteilschalung, des harten Kerns und des weichen Mantels. Beim Demontieren des harten Kerns werden die Schrauben, welche in die Sicherheitsdübel geschraubt sind, sowie die Schrauben, welche in die Betoneinbaudose geschraubt sind, entfernt. Der Kanal 25 für den Leuchteneinsatz ist größer als der dahinterliegende Hohlkörper 1.
Schlussendlich werden nach dem Einziehen der Elektroleitungen in die Betoneinbaudose das Betriebsgerät und im Lichtkanal der Leuchteneinsatz eingebaut.
Bei der in Figur 49c dargestellten Ausführungsform ist das Leuchtmittel 2 im Kanal 25 angeordnet. Dies entspricht der in Figur 13 in der mittleren Abbildung gezeigten Anordnung.

In den Fig. 50a bis 50c wird eine alternative Befestigungsmöglichkeit des erfindungsgemäßen Schalungssystems auf der Bauteilschalung dargestellt. Das gesamte Schalungssystem (Hohlkörper, harter Kern, weicher Mantel) wird mittels einer Drehmomentschraube 50 mit zwei Sollbruchstellen mit einer Basisplatte, welche auf die Bauteilschalung genagelt wird, verbunden. Dabei wird zuerst die Basisplatte 29 mit Metallstiften 16 auf der Bauteilschalung befestigt. Danach wird das gesamte Verschalungssystem über der Basisplatte positioniert. Eine Drehmomentschraube wird durch den Hohlkörper und den harten Kern bis zur Basisplatte geführt. Die Drehmomentschraube hat über dem Deckel eine starke Einkerbung, sodass bei Erreichen des richtigen Drehmoments während des Anschraubens der obere Teil der Drehmomentschraube abbricht. Der obere, über dem Deckel befindliche, Teil der Drehmomentschraube ist derart ausgeführt (z.B. mit einer gelochten Platte), dass dieser vom Beton umflossen wird und somit nach dem Aushärten des Betons gegen Verdrehen gesichert ist.

Nach dem Betoniervorgang wird die Bauteilschalung entfernt. An der Unterseite der Basisplatte 29 ist nun das untere Endteil der Drehmomentschraube 50 ersichtlich (Fig. 50b). An diesem Endteil ist ein Schlitz für den Einsatz eines Schlitzschraubenziehers oder ein Sechskantloch für den Einsatz eines Inbus-Schlüssels. Durch Verdrehen der Drehmomentschraube bricht die Schraube an der zweiten Einkerbung. Diese ist nicht so tief, wie die obere Einkerbung. Der im Hohlkörper verbleibende Teil der Drehmomentschraube 50 dient als Befestigungsmöglichkeit für den Leuchteneinsatz(Fig. 50c).

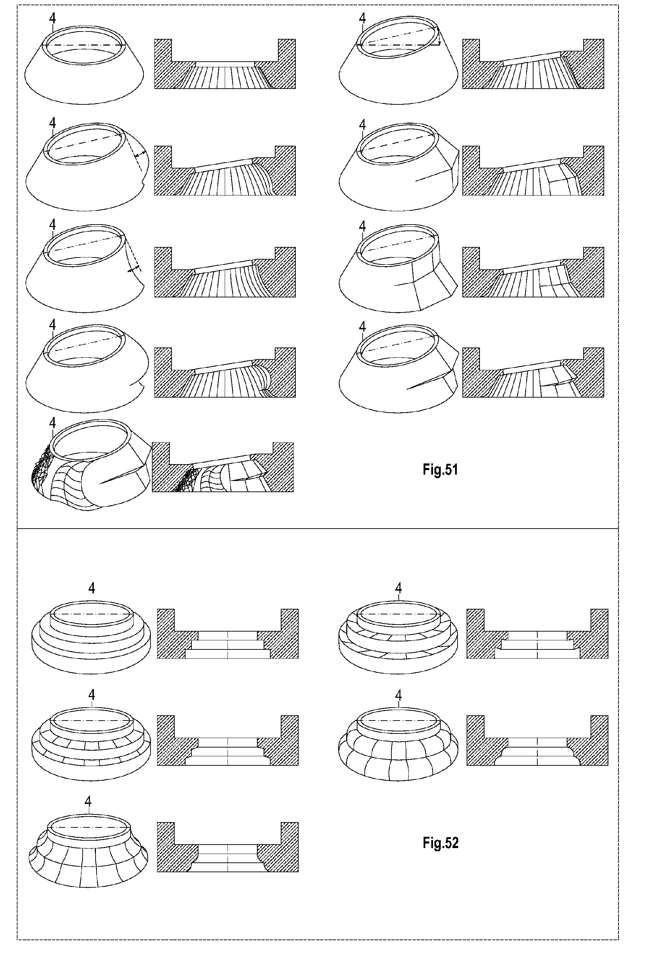

Die Abbildungen in Figur 51 zeigen beispielhaft unterschiedliche Ausbildungen des weichen Mantels. Entsprechend der dem Beton zugewandten Seite entsteht im Beton-Bauteil ein Negativ-Abdruck des weichen Mantels. Dabei kann die Außenseite des weichen Mantels beispielsweise rotationssymmetrisch mit einer glatten Oberfläche ausgebildet sein, mit einer Ausbeulung nach außen oder innen, mit oder ohne Hinterschnitt, wobei die Krümmung der Oberflächen entweder in doppelt gekrümmten Oberflächen oder bewusst strukturiert als triangulierte Oberfläche ausgeführt werden kann. Die Ausbildung von triangulierter (mit sehr kleinen (ca. 0,5 mm²) bis sehr großen (ca. 1000 mm²) Teilflächen) und gekrümmter Oberfläche kann auch in einer Form kombiniert werden (siehe unterste Abbildung).

Figur 52 zeigt beispielhafte Ausbildungen des weichen Mantels. Dabei ist (wie auch unter Fig. 51) dargestellt die Form der dem harten Kern zugewandten Seite immer gleich, die dem Beton zugewandten Seite variiert. Die abgebildeten Formen zeigen verschiedene rotationssymmetrische Formen, in gerader oder schräger, nach innen oder außen gewölbter abgetreppter Form. Die Höhe einer Abtreppung beträgt vorzugsweise zwischen 1 und 20 mm, die Anzahl der Abtreppungen ergibt sich dementsprechend aus der Höhe des weichen Mantels. Ist der weiche Mantel beispielsweise 60 mm und eine Abtreppung 5 mm hoch, so sind insgesamt 12 Abtreppungen vorhanden. Die Abtreppungen haben den Effekt, dass der Kanal, welcher vom Lichteinsatz angeleuchtet wird, in gleichmäßigen Hell- und Dunkelschattierungen leuchtet.

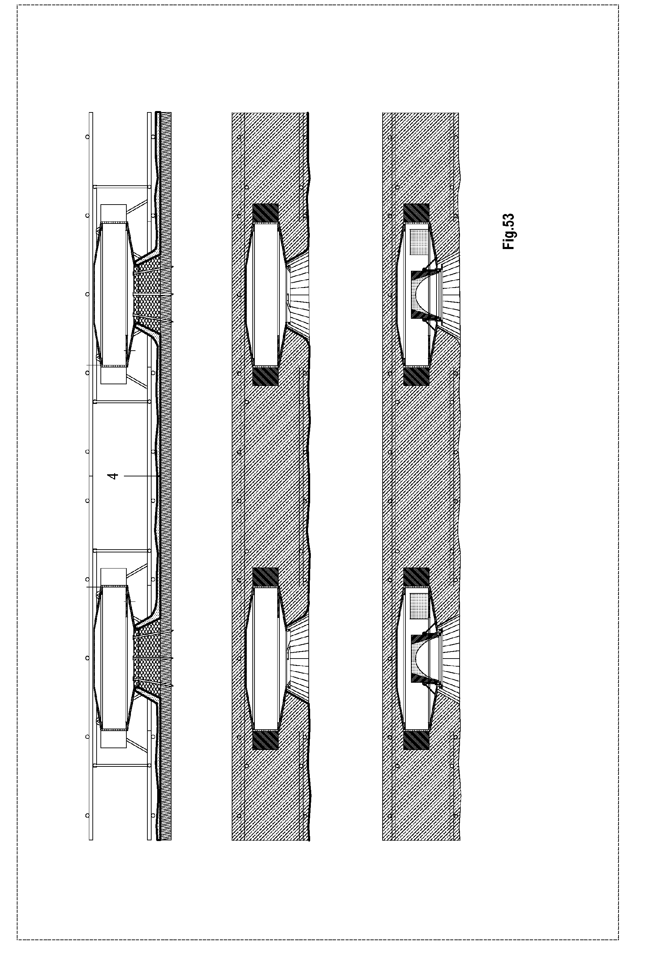

Fig. 53 zeigt Abbildungen einer Ausführungsform, bei der der weiche Mantel Teil einer vollflächigen Schalungsmatrize ist, welche auf der Bauteilschalung angebracht wird. Dieses System eignet sich für alle Arten der Herstellung eines Betonbauteils, vorzugsweise für die Herstellung eines Fertigteils.

Die Matrize ist ein Formteil, mit welcher die sichtbare Seite des Betonbauteils frei geformt und strukturiert werden kann. Dabei kann beispielsweise die Form eines sägerauen Holzbretts als Urform dienen. Die Matrize, beispielsweise aus PUR, ist ein Abdruck des Holzbretts. Diese Form wird vervielfacht und aneinandergereiht.

Nach dem positionsgenauen Montieren der harten Kerne als Halterung für die Hohlkörper wird die Schalungsmatrize, in welche die weichen Kerne des erfindungsgemäßen Verschalungssystem integriert sind, an der Bauteilschalung angebracht.

Der Montagevorgang entspricht im Wesentlichen dem des Verschalungssystems, wie es in den Fig. 32 - 43 dargestellt ist.

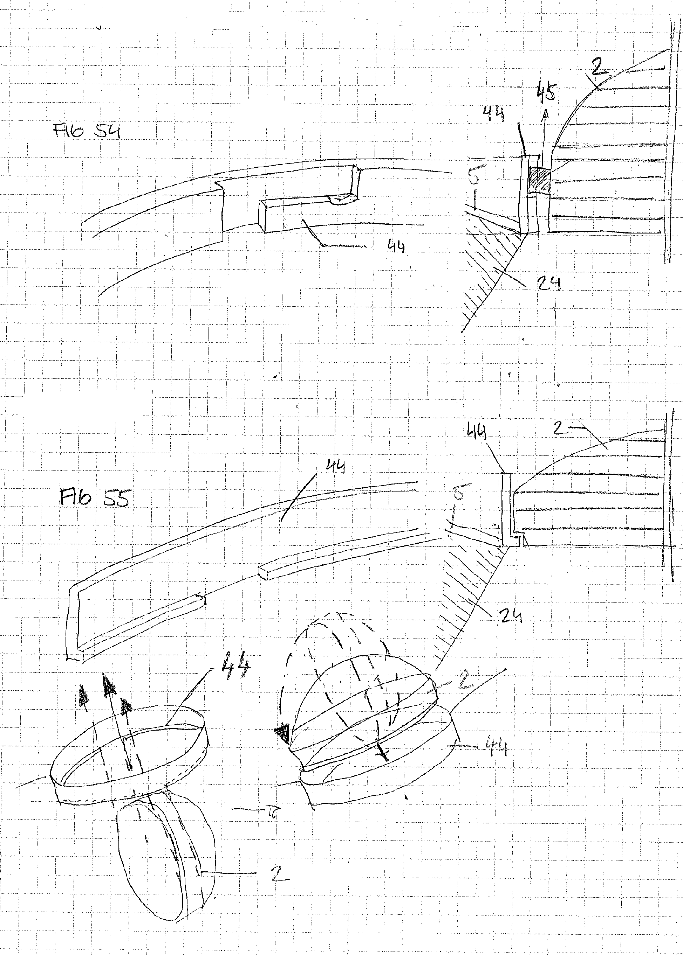

Fig. 54 zeigt einen Ring, in welchem eine Ausnehmung für einen Bajonettverschluss zur Befestigung eines Leuchtmittels ausgebildet ist. Die Ausnehmung weist einen schmalen nach unten hin offenen Abschnitt auf. An dem schmalen Abschnitt schließt sich ein in radialer Richtung erstreckender breiter Abschnitt an, der nach unten hin durch einen horizontalen Steg begrenzt ist. Diese Ausnehmung ist nach oben hin offen. Hierdurch kann beim Einsetzen und Herausnehmen eines Leuchtmittels 2 das Leuchtmittel beliebig weit nach oben angehoben werden. Das Leuchtmittel kann eingesetzt und wieder herausgenommen werden, ohne dass hier Reibungskräfte auftreten.

Fig. 55 zeigt einen Ring 44, der an seinem unteren Rand einen umlaufenden Steg aufweist. Der umlaufende Steg ist mit einer Ausnehmung versehen, die derart breit ist, dass ein etwa scheibenförmiges Leuchtmittel durch diese Ausnehmung hindurch eingeführt, gekippt und auf den Ringsteg aufgelegt werden kann. Beim Herausnehmen wird das Leuchtmittel wiederum angehoben, gekippt und durch die Ausnehmung herausgezogen.

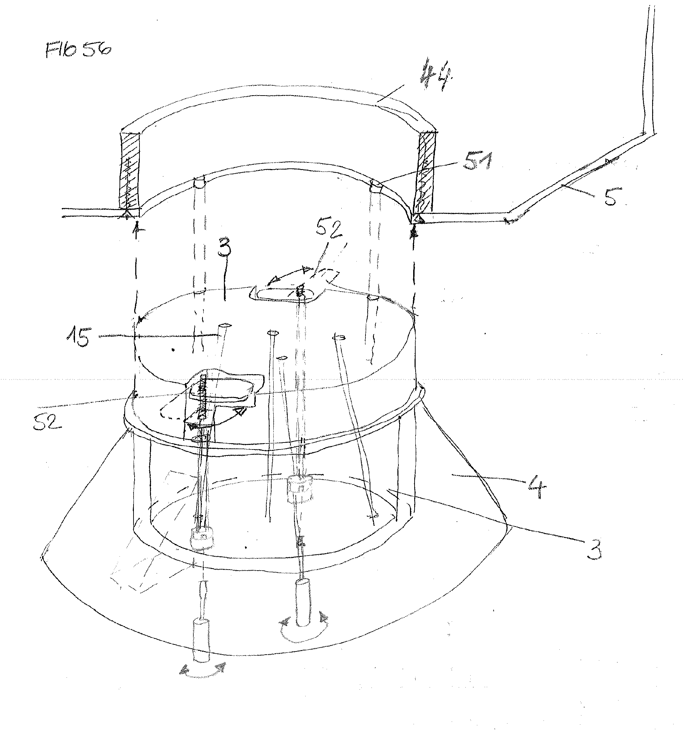

Fig. 56 zeigt eine spezielle Ausbildung eines harten Kerns 3. Dieser harte Kern 3 ist dazu ausgebildet, in eine Öffnung einer Bodenwandung 5 eingesetzt zu werden, wobei in der Öffnung ein oder mehrere Vorsprünge 51 ausgebildet sind, welche in korrespondierende Nuten des harten Kerns 3 eingreifen. Die Nuten sind im harten Kern in Vertikalrichtung verlaufend angeordnet. Im vorliegenden Ausführungsbeispiel sind die Vorsprünge 51 unmittelbar an der Bodenwandung 5 ausgebildet. Sie können jedoch auch an einem Ring 44, der die Öffnung umschließt, ausgebildet sein. An der Oberseite weist der harte Kern 3 eine bewegliche Lasche 52 auf, die an einem sich durch den harten Kern erstreckenden Bolzen befestigt ist. Der Bolzen ist mit einem Werkzeug drehbar betätigbar, so dass die Lasche 52 ausgeschwenkt und wieder zurück eingeschwenkt werden kann. Im eingeschwenkten Zustand kann der harte Kern durch die Öffnung in der Bodenwandung 5 eingeschoben werden, wobei dann die Lasche 52 ausgeschwenkt wird und entweder den Ring 44 oder die Bodenwandung 5 hintergreift. Dies stellt einen einfachen Befestigungsmechanismus zur Befestigung des harten Kerns dar, der nach dem Verschalen einfach wieder gelöst werden kann.

### Bezugszeichenliste:

| | | | |
|---|---|---|---|
| | | 28. | Endfläche (Kreis) |
| 1. | Hohlkörper | 29. | Basisplatte |
| 2. | Leuchtmittel | 30. | Rastvorsprung |
| 3. | harter Kern | 31. | Leuchtdiodenarray |
| 4. | weicher Mantel | 32. | Kühlkörper |
| 5. | Bodenwandung | 33. | Rastvorsprünge |
| 6. | Längsseitenwandung | 34. | Winkelskala |
| 7. | Stirnseitenwandung | 35. | Kühlrippen |
| 8. | Deckel | 36. | Einkerbung |
| 9. | Öffnung | 37. | Ausstülpung |
| 10. | Betriebsgerät | 38. | Schutzbewehrung |
| 11. | Anschluss-Stutzen | 39. | Halterung |
| 12. | Lasche | 40. | Fase |
| 13. | Durchgangsloch | 41. | Schraube |
| 14. | Gewindeschraube | 42. | Abdeckplatte |
| 15. | Durchgangsloch | 43. | Gewindestange mit Muttern |
| 16. | Metallstift | 44. | Ring |
| 17. | Stift | 45. | Seitliche Bolzen |
| 18. | U-Profil | 46. | Grundplatte |
| 19. | Mutter | 47. | Stromklemme |
| 20. | Bauteilschalung | 48. | Bezugssystem |
| 21. | Bewehrungseisen | 49. | Sicherheitsdübel |
| 22. | Leerrohr | 50. | Drehmomentschraube mit Sollbruchstellen |
| 23. | Draht | | |
| 24. | Beton | 51. | Vorsprung |
| 25. | Kanal | 52. | Lasche |
| 26. | Außenfläche | | |
| 27. | Basisfläche (Ellipse) | | |

## Patentansprüche

1. Verschalungssystem für eine in eine Betonwand integrierte Leuchte, umfassend
- einen Hohlkörper (1) zum Aufnehmen eines Leuchtmittels (2), wobei der Hohlkörper (1) eine Öffnung (9) aufweist,
- einen Schalungskörper (3, 4), der am Hohlkörper (1) derart befestigbar ist, dass er die Öffnung (9) verschließt, wobei der Schalungskörper (3, 4) aus einem harten Kern (3) und einem weichen Mantel (4) ausgebildet ist.

2. Verschalungssystem nach Anspruch 1,
**dadurch gekennzeichnet, dass** der Schalungskörper sich von der Öffnung (9) des Hohlkörpers (1) ausgehend in Richtung zu der vom Hohlkörper (1) abgewandte Seite aufweitend ausgebildet ist, und/oder dass der Schalungskörper eine Länge von zumindest 1 cm bzw. 2 cm bzw. 3 cm bzw. 3,5 cm bzw. 4 cm bis 10 cm aufweist.

3. Verschalungssystem nach Anspruch 1 oder 2,
**dadurch gekennzeichnet, dass** lösbare Befestigungsmittel zum Befestigen des Schalungskörpers (3, 4) am Hohlkörper (1) vorgesehen sind, wobei die Befestigungsmittel Gewindeschrauben (14) umfassen können, die in den entsprechenden Gewindebohrungen an sich im Hohlkörper (1) befindlichen Halteelementen (18) einschraubbar sind und Durchgangslöcher (13) im harten Kern (3) durchsetzen, oder die Befestigung als Bajonettverschluss ausgeführt ist..

4. Verschalungssystem nach Anspruch 3,
**dadurch gekennzeichnet, dass** die Halteelemente (18) mit Abstand zu einer Wandung des Hohlkörpers (1) angeordnet sind, in der die Öffnung (9) ausgebildet ist, und der Schalungskörper einen Bereich aufweist, der mit einer geringfügig kleineren Querschnittsform als die Öffnung (9) ausgebildet ist, so dass der Schalungskörper ein Stück in die Öffnung (9) einziehbar ist.

5. Verschalungssystem nach einem der Ansprüche 1 bis 3,
**dadurch gekennzeichnet, dass** der Schalungskörper mit seinem am Hohlkörper (1) weisenden Endbereich etwas größer als die Öffnung (9) des Hohlkörpers (1) ausgebildet ist, so dass der Schalungskörper (3, 4) am Randbereich der Öffnung (9) am Hohlkörper (1) aufliegt.

6. Verschalungssystem nach einem der Ansprüche 1 bis 5,
**dadurch gekennzeichnet, dass** der Hohlkörper (1) einen lösbaren Deckel (8) aufweist, und/oder, dass am Hohlkörper (1) zumindest eine in der Höhe verstellbare Lasche (12) vorgesehen ist, um den Hohlkörper (1) auf einer Bauteilschalung (20) und/oder auf einem Bewehrungseisen (21) zu justieren und/oder zu fixieren.

7. Verschalungssystem nach einem der Ansprüche 1 bis 6,
**dadurch gekennzeichnet, dass** der weiche Mantel (4) eine Dicke von 0,5 bis 100 mm und insbesondere eine Dicke von 1,5 bis 15 mm aufweist.

8. Verschalungssystem nach einem der Ansprüche 1 bis 8,
**dadurch gekennzeichnet, dass** der Hohlkörper (1) zumindest eine Öffnung aufweist, an welchen Anschluss-Stutzen (11) zum Anschließen von jeweils einem Leerrohr (22) ausgebildet sind, und/oder dass mit dem Hohlkörper kommunizierend verbundene Schläuche oder Rohrelemente bis zur Bauteilschalung geführt sind, so dass in der fertigen Betonwand ein in den Hohlkörper führender Belüftungsschacht begrenzt wird, und/oder zum Anschließen von einem externen Kühlsystem..

9. Verschalungssystem nach einem der Ansprüche 1 bis 8,
**dadurch gekennzeichnet, dass** die Leuchte bzw. ein mit der Leuchte verbundener Kühlkörper in thermischen Kontakt mit einem Wärmeleiter ist, der aus der Hohlkammer herausgeführt ist, wobei vorzugsweise der Wärmeleiter eine Eisenbewehrung ist, und/oder Wärmeleiter, die mit einem externen Kühlsystem verbunden sind..

10. Leuchte, die in eine Betonwand integriert ist, umfassend
- einen in die Betonwand eingegossenen Hohlkörper, in dem ein Leuchtmittel (2) angeordnet ist, wobei der Hohlkörper eine Öffnung (9) zum Austreten von dem Leuchtmittel (2) abgegebenen Licht aufweist,
- einen sich von der Öffnung nach außen hin aufweitenden Kanal (25), der von dem Beton der Betonwand begrenzt wird.

11. Leuchte nach Anspruch 10,
**dadurch gekennzeichnet, dass** die Leuchte mit einem Verschalungssystem nach einem der Ansprüche 1 bis 9 hergestellt ist.

12. Verfahren zum Ausbilden eines Hohlraumes in einer Betonwand zum Aufnehmen einer Leuchte, wobei umfassend folgende Schritte:
a) Befestigen eines Schalungskörpers, der einen harten Kern und einen weichen Mantel aufweist, an einem Hohlkörper, so dass eine Öffnung des Hohlkörpers durch den Schalungskörper abgedeckt ist,
b) Befestigen des Schalungskörpers an einer Bauteilschalung mit der von dem Hohlkörper abgewandten Seite,
c) Ausgießen der Bauteilschalung mit Beton,
d) Entfernen der Bauteilschalung,
e) Entfernen des Schalungskörpers.

13. Verfahren nach Anspruch 12,
**dadurch gekennzeichnet, dass** der Hohlkörper vor dem Ausgießen mit Beton an der Bauteilschalung (22) und/oder an einer Eisenbewehrung (21) fixiert wird.

14. Verfahren nach Anspruch 12 oder 13,
**dadurch gekennzeichnet, dass** ein Verschalungssystem nach einem der Ansprüche 1 bis 9 verwendet wird.

15. Verschalungssystem für ein in eine Betonwand integriertes Funktionselement, wie z.B. eines Tasters von einem Schalter, einer Steckdose, einem Brandmelder oder einem Bewegungsmelder, einer Audioanlage oder einer Lüftungseinrichtung, umfassend
- einen Hohlkörper zum Aufnehmen zumindest eines Teils des Funktionselementes, wobei der Hohlkörper eine Öffnung aufweist,
- einen Schalungskörper, der am Hohlkörper derart befestigbar ist, dass er die Öffnung verschließt, wobei der Schalungskörper aus einem harten Kern und einem weichen Mantel ausgebildet ist, wobei das Verschalungssystem insbesondere nach einem der Ansprüche 2 bis 13 weitergebildet ist.
